Europäisches Patentamt

European Patent Office

Office européen des brevets

(11) Veröffentlichungsnummer: **0 378 651 B1**

## (12) EUROPÄISCHE PATENTSCHRIFT

(45) Veröffentlichungstag der Patentschrift: **13.10.93**

(51) Int. Cl.$^5$: **G01F 1/66**

(21) Anmeldenummer: **89907731.7**

(22) Anmeldetag: **06.07.89**

(86) Internationale Anmeldenummer:
**PCT/EP89/00775**

(87) Internationale Veröffentlichungsnummer:
**WO 90/00723 (25.01.90 90/03)**

(54) **VERFAHREN UND ANORDNUNG ZUR DURCHFLUSSMESSUNG MITTELS ULTRASCHALLWELLEN.**

(30) Priorität: **08.07.88 DE 3823177**
**23.12.88 DE 3843678**

(43) Veröffentlichungstag der Anmeldung:
**25.07.90 Patentblatt 90/30**

(45) Bekanntmachung des Hinweises auf die
Patenterteilung:
**13.10.93 Patentblatt 93/41**

(84) Benannte Vertragsstaaten:
**CH DE FR GB IT LI NL**

(56) Entgegenhaltungen:
**GB-A- 2 099 146**

**P. Horowitz et al.: "The art of electronics", 4.
Auflage, 1983, Cambridge University Press,
Cambridge, GB, Seiten 621-623**

(73) Patentinhaber: **Endress + Hauser Flowtec AG**
**Kägenstrasse 7**
**CH-4153 Reinach BL 1(CH)**

(72) Erfinder: **LANG, Michael**
**Oetlingerweg 13**
**D-7858 Weil-Haltingen(DE)**
Erfinder: **STEINACHER, Michael**
**Gotthelfstrasse 92**
**CH-4054 Basel(CH)**

(74) Vertreter: **Morstadt, Volker, Dipl.-Ing.**
**c/o Endress + Hauser Flowtec AG**
**Kägenstrasse 7**
**Postfach 435**
**CH-4153 Reinach BL 1 (CH)**

EP 0 378 651 B1

**Beschreibung**

Die Erfindung besteht in einem Verfahren zur Durchflußmessung mittels Ultraschallwellen, die sich in einem durch ein Meßrohr strömenden Medium zwischen zwei im Abstand voneinander angeordneten Ultraschallwandlern ausbreiten, von denen der eine als Sendewandler arbeitet, der ein elektrisches Sendesignal in eine Ultraschallwelle gleicher Frequenz umwandelt, während der andere als Empfangswandler arbeitet, der die ankommende Ultraschallwelle in ein elektrisches Empfangssignal gleicher Frequenz umwandelt, wobei zur Bestimmung des Durchflusses die Phasenverschiebung zwischen dem Sendesignal und dem Empfangssignal derart gemessen wird, daß in Meßzeitintervallen, deren Dauer der Phasenverschiebung entspricht, jeweils die Perioden eines Signals einer Zählfrequenz gezählt werden, die wesentlich größer als die der Frequenz des Sendesignals entsprechende Meßfrequenz ist, daß der Phasenwinkel der Startphase, den das Zählfrequenzsignal Beim Beginn jedes Zählvorgangs gegenüber dem Meßzeitintervall aufweist, in einem mehrere aufeinanderfolgende Meßzeitintervalle umfassenden Meßzyklus von Meßzeitintervall zu Meßzeitintervall vergrößert wird und daß die im Verlauf des Meßzyklus erhaltenen Zählwerte zur Bildung eines Meßwerts mit erhöhter Meßauflösung ausgewertet werden.

Bei diesem Durchflußmeßverfahren ergibt sich der zu messende Durchfluß aus der Phasenverschiebung zwischen dem Sendesignal und dem Empfangssignal bei einer sich in einer Richtung ausbreitenden Ultraschallwelle, wenn die Schallgeschwindigkeit bekannt ist. Durch Ermittlung der Phasenverschiebungen bei einer sich in der Strömungsrichtung ausbreitenden Ultraschallwelle und bei einer sich gegen die Strömungsrichtung ausbreitenden Ultraschallwelle ist es möglich, aus der Differenz dieser Phasenverschiebungen ein von der Schallgeschwindigkeit unabhängiges Meßergebnis für den Durchfluß zu erhalten.

Die Erfindung besteht ferner in einer Anordnung mit einem Von einem Medium durchströmten Messrohr, zwei an dem Messrohr in einem definierten Abstand voneinander angeordneten Ultraschallwandlern, Einrichtungen zum Anlegen eines elektrischen Sendesignals mit der Meßfrequenz an einen der beiden Ultraschallwandler und zum Empfang des von dem anderen Ultraschallwandler abgegebenen elektrischen Empfangssignals mit der Meßfrequenz, einem Zählfrequenzgenerator, der ein Zählfrequenzsignal mit einer Zählfrequenz erzeugt, die wesentlich größer als die Meßfrequenz ist, einem Zähler, der die Perioden des Zählfrequenzsignals in Meßzeitintervallen zählt, die der Phasenverschiebung zwischen dem Sendesignal und dem Empfangssignal entsprechen, einer Auswerteschaltung, zu der der in jedem Meßzeitintervall erreichte Zählerstand übertragen wird, und Einrichtungen, die die Startphase, die das Zählfrequenzsignal beim Beginn jedes Zählvorgangs gegenüber dem Meßzeitintervall aufweist, in einem mehrere aufeinanderfolgende Meßzeitintervalle umfassenden Meßzyklus von Meßzeitintervall zu Meßzeitintervall vergrößern.

Bei einem aus der CH-PS 628 140 bekannten Verfahren wird die für jede Ausbreitungsrichtung ermittelte Phasenverschiebung zwischen dem Sendesignal und dem Empfangssignal in eine dazu proportionale Gleichspannung umgewandelt, die in einer Abtast- und Speicherschaltung gespeichert wird. Die beiden gespeicherten Gleichspannungen werden dann an die beiden Eingänge eines Differenzverstärkers angelegt, der somit am Ausgang eine Differenzspannung liefert, die der Differenz der Phasenverschiebungen und damit der Strömungsgeschwindigkeit proportional ist. Zusätzlich wird durch Bildung der Summe der gespeicherten Gleichspannungen eine Spannung erhalten, die der Schallgeschwindigkeit im Medium proportional ist. Schließlich wird bei diesem bekannten Verfahren die Frequenz der Ultraschallwelle in Abhängigkeit von den ermittelten Phasenverschiebungen auf einen optimalen Wert geregelt, und die aus der Differenzspannung erhaltene Strömungsgeschwindigkeit wird in Abhängigkeit von der eingestellten Frequenz korrigiert.

Dieses bekannte Verfahren erfordert einen hohen Aufwand an präzisen Analogschaltungen und ist dennoch mit den bei jeder Analogsignalverarbeitung unvermeidlichen Fehlerursachen behaftet, so daß die erzielbare Meßgenauigkeit begrenzt ist. Ferner liegt das erhaltene Ausgangssignal in Form einer Analogspannung vor, die nicht unmittelbar für eine digitale Auswertung, beispielsweise durch einen Mikrocomputer, geeignet ist.

Aufgabe der Erfindung ist die Schaffung eines Durchflußmeßverfahrens der eingangs angegebenen Art, das mit verhältnismäßig geringem Schaltungsaufwand eine Durchflußmessung mit großer Meßgenauigkeit auf digitalem Wege ermöglicht und daher das Meßergebnis in Form eines digitalen Signals zur Verfügung stellt.

Bei dem erfindungsgemäßen Verfahren wird durch die Zählung der Perioden einer Zählfrequenz während der den Phasenverschiebungen entsprechenden Meßzeitintervalle die Phasenmessung auf eine digitale Zeitmessung reduziert, die sich mit den weit verbreiteten integrierten Digitalschaltungen bequem und sicher durchführen läßt. Es besteht jedoch das Problem, daß die digitale Messung systembedingt mit einem Quantisierungsfehler behaftet ist, der die erzielbare Auflösung bei der Messung begrenzt, denn das kleinste unterscheidbare Zeitintervall entspricht der Periodendauer des Zählfrequenzsignals. Die der Pha-

2

senmessung entsprechenden Meßzeitintervalle sind bei den üblichen Anwendungsbedingungen sehr kurz, und sie müssen insbesondere dann mit großer Meßgenauigkeit und dementsprechend hoher Auflösung gemessen werden, wenn für eine von der Schallgeschwindigkeit unabhängige Durchflußmessung die Differenz der Phasenverschiebungen ausgewertet wird. Die Dauer der Meßzeitintervalle liegt in der Größenordnung von Mikrosekunden und ihre Differenz in der Größenordnung von Bruchteilen einer Nanosekunde. Um derart kurze Zeitintervalle durch digitale Zählung von Zählfrequenzperioden mit einer für die geforderte Meßgenauigkeit ausreichenden Auflösung zu messen, wären außerordentlich hohe Zählfrequenzen erforderlich, deren Erzeugung und Auswertung einen großen technischen Aufwand erfordern würden.

Bei dem erfindungsgemäßen Verfahren wird eine im Verhältnis zur Zählfrequenz verbesserte Auflösung durch die zusätzliche Vergrößerung der Startphase in aufeinanderfolgenden Meßzeitintervallen erzielt. Diese Maßnahme hat zur Folge, daß sich die Anzahl der im Verlauf eines Meßzeitintervalls gezählten Zählfrequenzperioden während des Meßzyklus ändert; während für eine Anzahl der Meßzeitintervalle k Zählfrequenzperioden gezählt werden, werden für die restliche Anzahl der Meßzeitintervalle k + 1 Zählfrequenzperioden gezählt. Das Verhältnis dieser Anzahlen ermöglicht eine genauere Aussage über die wirkliche Dauer der Meßzeitintervalle und demzufolge eine Erhöhung der Auflösung über den einer Zählfrequenzperiode entsprechenden Quantisierungsschritt hinaus. Diese Erhöhung der Auflösung wächst mit der Anzahl der in einem Meßzyklus zur Bildung eines Meßwerts ausgewerteten Meßzeitintervalle, doch erhöht sich natürlich auch die für die Gewinnung eines Meßwerts erforderliche Meßzeit in gleichem Maße. Im allgemeinen sind jedoch die erforderlichen Meßzeiten so kurz, daß ihre Dauer gegenüber dem Vorteil der erhöhten Auflösung nicht ins Gewicht fällt.

Aus dem allgemeinen Stand der Technik der elektronischen Frequenz- bzw. Zeitmeßtechnik ist es nach dem Buch von P. Horowitz und W. Hill "The Art of Electronics", New York, 1980, Seiten 622 und 623 ferner bekannt, den oben erläuterten Ungenauigkeitsfehler durch ein Jittern des Zählfrequenzsignals zu verringern, also durch ein geringfügiges, einer Frequenzmodulation vergleichbares Schwankenlassen seiner Frequenz um eine Mittenfrequenz.

Bei der Erfindung wird demgegenüber die Frequenz des Zählfrequenzsignals konstant gehalten, jedoch dessen Startphase kontinuierlich vergrößert.

Bevorzugte Ausführungsformen und Weiterbildungen des erfindungsgemäßen Verfahrens sowie der Anordnung zur Durchführung des Verfahrens sind in den Unteransprüchen gekennzeichnet. Diese Ausführungsformen und Weiterbildungen betreffen insbesondere auch Maßnahmen zur Ermittlung der Anzahl der ganzen Wellenlängen auf der Meßstrecke sowie eine Ausbildung der Ultraschallwandler, die für die Durchführung des erfindungsgemäßen Verfahrens besondert gut geeignet ist.

Weitere Merkmale und Vorteile der Erfindung ergeben sich aus der folgenden Beschreibung von Ausführungsbeispielen anhand der Zeichnung. In der Zeichnung zeigt:

Fig. 1      eine schematische Darstellung einer Durchflußmeßanordnung, bei der die Erfindung anwendbar ist,

Fig. 2      Zeitdiagramme von Signalen, die bei einer Betriebsart in der Durchflußmeßanordnung von Fig. 1 auftreten,

Fig. 3      Zeitdiagramme der gleichen Signale bei einer anderen Betriebsart der Durchflußmeßanordnung von Fig. 1,

Fig. 4      Zeitdiagramme zur Erläuterung der bei der Durchflußmeßanordnung von Fig. 1 angewendeten digitalen Phasenmessung,

Fig. 5      das Blockschaltbild einer Ausführungsform der Durchflußmeßanordnung nach der Erfindung,

Fig. 6      Diagramme zur Erläuterung der Funktionsweise der Durchflußmeßanordnung von Fig. 5,

Fig. 7      das Blockschaltbild einer Ausführungsform des in der Durchflußmeßanordnung von Fig. 5 enthaltenen steuerbaren Phasenschiebers in näheren Einzelheiten,

Fig. 8      eine abgeänderte Ausführungsform der Durchflußmeßanordnung von Fig. 5,

Fig. 9      das Blockschaltbild einer anderen Ausführungsform der erfindinngsgemäßen Durchflußmeßanordnung,

Fig. 10      das Schaltbild einer Ausführungsform des in der Durchflußmeßanordnung von Fig. 9 enthaltenen Differenz-Zählfrequenzgenerators,

Fig. 11      das Blockschaltbild einer weiteren Ausführungsform der Durchflußmeßanordnung,

Fig. 12      Diagramme zur Erläuterung der Funktionsweise der Durchflußmeßanordnung von Fig. 11,

Fig. 13      eine Schnittansicht einer bevorzugten Ausführungsform eines Ultraschallwandlers,

Fig. 14      eine Gesamtansicht der Durchflußmeßanordnung mit einem Meßrohr sowie zwei Ultraschallwandlern und zwei Dämpfungsrohren der in Fig. 13 gezeigten Art,

Fig. 15      das Blockschaltbild einer zusätzlichen Anordnung zur Ermittlung der Anzahl ganzer Wellenlängen im Meßrohr,

Fig. 16    Diagramme zur Erläuterung der Funktionsweise der Anordnung von Fig. 15,

Fig. 17    ein Gesamtblockschaltbild der Durchflußmeßanordnung und

Fig. 18    Diagramme zur Erläuterung der Funktionsweise der in der Durchflußmeßanordnung von Fig. 17 enthaltenen Invertierschaltung.

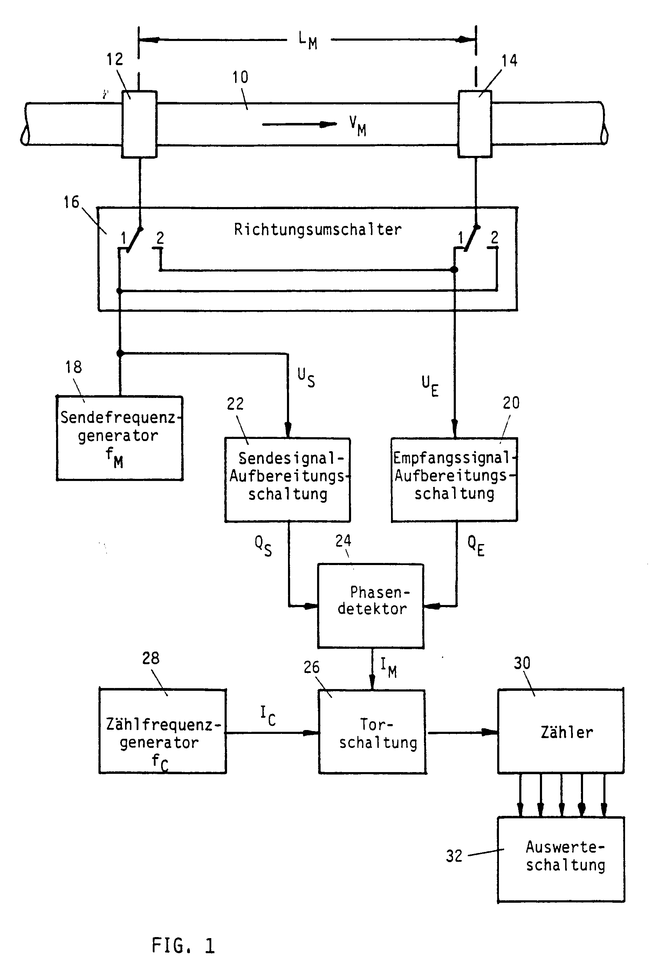

Die in Fig. 1 dargestellte Durchflußmeßanordnung enthält ein Meßrohr 10, durch das ein Medium in der Pfeilrichtung mit der Strömungsgeschwindigkeit $V_M$ strömt. Zur Ermittlung des Volumendurchflusses des Mediums genügt die Messung der Strömungsgeschwindigkeit $V_M$, da der Volumendurchfluß gleich dem Produkt aus der Strömungsgeschwindigkeit $V_M$ und dem bekannten Querschnitt des Meßrohres ist.

Zur Messung der Strömungsgeschwindigkeit $V_M$ sind an dem Meßrohr 10 zwei Ultraschallwandler 12 und 14 in einem genau bekannten Abstand $L_M$ voneinander angebracht. Jeder Ultraschallwandler kann wahlweise als Sendewandler oder als Empfangswandler betrieben werden. Ein Richtungsumschalter 16 verbindet in der Stellung 1, die in der Zeichnung dargestellt ist, den Ultraschallwandler 12 mit dem Ausgang eines Sendefrequenzgenerators 18 und gleichzeitig den Ultraschallwandler 14 mit dem Eingang einer Empfangssignal-Aufbereitinngsschaltung 20. In seiner anderen Stellung 2 verbindet der Richtungsumschalter 16 den Ultraschallwandler 14 mit dem Ausgang des Sendefrequenzgenerators 18 und den Ultraschallwandler 12 mit dem Eingang der Empfangssignal-Aufbereitungsschaltung 20. Der Richtungsumschalter 16 ist in der Zeichnung symbolisch durch mechanische Umschaltkontakte dargestellt, doch ist er in Wirklichkeit in an sich bekannter Weise mit elektronischen Schaltgliedern ausgebildet.

Der Sendefrequenzgenerator 18 gibt am Ausgang eine elektrische Sendewechselspannung $U_S$ der Frequenz $f_M$ ab, die in der dargestellten Stellung des Richtungsumschalters 16 an den Ultraschallwandler 12 angelegt wird. Der Ultraschallwandler 12 arbeitet dann als Sendewandler. Er ist so ausgebildet, daß er aufgrund der Erregung durch die elektrische Sendewechselspannung $U_S$ eine Ultraschallwelle der gleichen Frequenz $f_M$ erzeugt, die sich in der Richtung der Achse des Meßrohres 10 in dem durch das Meßrohr strömenden Medium ausbreitet. Diese Ultraschallwelle geht in der Strömungsrichtung zum Ultraschallwandler 14, der in der dargestellten Stellung 1 des Richtungsumschalters 16 mit dem Eingang der Empfangssignal-Aufbereitungsschaltung 20 verbunden ist. Der Ultraschallwandler 14 arbeitet daher als Empfangswandler; er wandelt die ankommende Ultraschallwelle in eine Empfangswechselspannung $U_E$ ab, die dem Eingang der Empfangsignal-Aufbereitungsschaltung 20 zugeführt wird.

Wenn der Richtungsumschalter 16 in die andere Stellung 2 gebracht wird, empfängt der Ultraschallwandler 14 die Sendewechselspannung $U_S$ vom Sendefrequenzgenerator 18, so daß er als Sendewandler arbeitet und eine Ultraschallwelle erzeugt, die sich in der Richtung der Achse des Meßrohres 10 in dem durch das Meßrohr 10 strömenden Medium ausbreitet. Diese Ultraschallwelle geht entgegengesetzt zur Strömungsrichtung zum Ultraschallwandler 12, der nunmehr mit dem Eingang der Empfangssignal-Aufbereitungsschaltung 20 verbunden ist und als Empfangswandler arbeitet, der die ankommende Ultraschallwelle in die Empfangswechselspannung $U_E$ umwandelt, die dem Eingang der Empfangssignal-Aufbereitungsschaltung 20 Zugeführt wird.

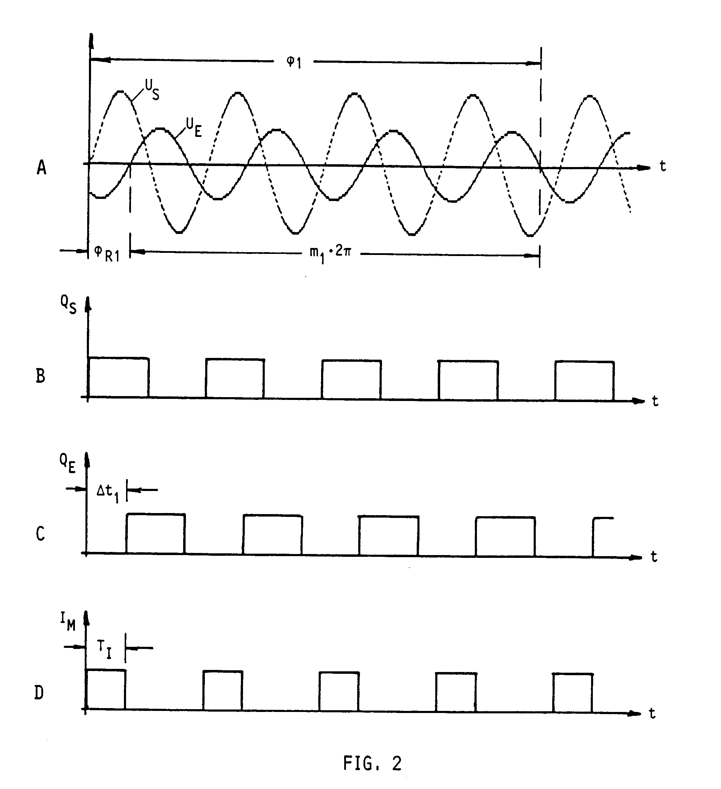

Das Diagramm A von Fig. 2 zeigt den zeitlichen Verlauf der vom Sendefrequenzgenerator 18 abgegebenen Sendewechselspannung $U_S$ und der vom Empfangswandler zur Empfangssignal-Aufbereitungsschaltung 20 gelieferten Empfangswechselspannung $U_E$ für den Fall, daß der Richtungsumschalter 16 die in Fig. 1 dargestellte Stellung 1 einnimmt, so daß also der Ultraschallwandler 12 als Sendewandler und der Ultraschallwandler 14 als Empfangswandler arbeitet. Zwischen diesen beiden Wechselspannungen besteht eine Gesamtphasendrehung $\phi_1$, die sich aus der Laufzeit ergibt, die die Ultraschallwelle in dem strömenden Medium benötigt, um die Strecke $L_M$ vom Sendewandler Zum Empfangswandler zu durchlaufen. Diese Laufzeit hängt von der Länge der Strecke $L_M$ und von der Geschwindigkeit der Ultraschallwelle relativ zu den feststehenden Ultraschallwandlern 12 und 14 ab. Da im Falle des Diagramms A von Fig. 2 die Ultraschallwelle die Strecke $L_M$ in der Strömungsrichtung des Mediums durchläuft, entspricht die Relativgeschwindigkeit der Ultraschallwelle der Summe aus der Schallgeschwindigkeit c im Medium und der Strömungsgeschwindigkeit $V_M$. Die Laufzeit, die die Ultraschallwelle zum Durchlaufen der Strecke $L_M$ benötigt, entspricht einer Gesamtphasendrehung $\phi_1$, die sich aus der folgenden Formel ergibt:

$$\phi_1 = \omega_M \frac{L_M}{c + V_M} \qquad (1)$$

Darin ist $\omega_M = 2\pi f_M$ die bekannte Kreisfrequenz der Ultraschallwelle.

Die Gesamtphasendrehung $\phi_1$ setzt sich aus der Anzahl $m_1$ der ganzen Wellenlängen zwischen den beiden Wandlern und aus einem Restphasenwinkel $\phi_{R1}$ zusammen:

$$\phi_1 = \phi_{R1} + m_1 \cdot 2\pi \qquad (2)$$

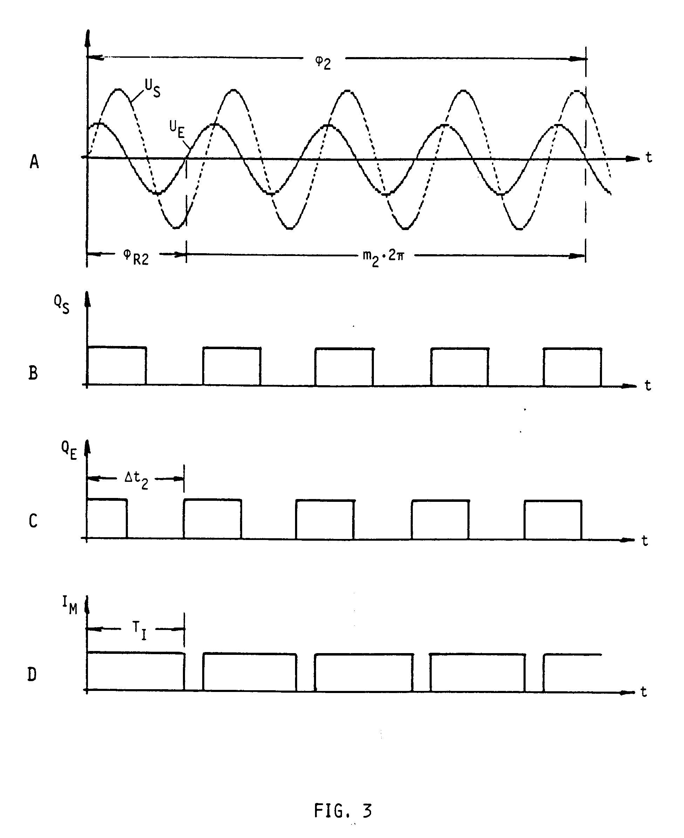

In entsprechender Weise zeigt das Diagramm A von Fig. 3 den zeitlichen Verkauf der Sendewechselspannung $U_S$ und der Empfangswechselspannung $U_E$ für den Fall, daß sich der Richtungsumschalter 16 in der anderen Stellung befindet, so daß der Ultraschallwandler 14 als Sendewandler und der Ultraschallwandler 12 als Empfangswandler arbeitet. In diesem Fall durchläuft die Ultraschallwelle die Strecke $L_M$ entgegengesetzt zur Strömungsrichtung, so daß die Relativgeschwindigkeit der Ultraschallwelle der Differenz zwischen der Schallgeschwindigkeit c im Medium und der Strömungsgeschwindigkeit $V_M$ entspricht. Demzufolge erfährt die Ultraschallwelle beim Durchlaufen der Strecke L eine Gesamtphasendrehung $\phi_2$, die sich aus der folgenden Formel ergibt:

$$\phi_2 = \omega_M \frac{L_M}{c - V_M} \qquad (3)$$

Diese Gesamtphasendrehung $\phi_2$ setzt sich wieder aus der Anzahl $m_2$ der ganzen Wellenlängen zwischen den beiden Ultraschallwandlern und aus einem Restphasenwinkel $\phi_{R2}$ zusammen:

$$\phi_2 = \phi_{R2} + m_2 \cdot 2\pi \qquad (4)$$

Durch Messung der Gesamtphasendrehung $\phi_1$ läßt sich aus der Formel (1) die gesuchte Strömungsgeschwindigkeit $V_M$ berechnen, wenn die Schallgeschwindigkeit c im Medium bekannt ist:

$$V_M = \frac{\omega_M \cdot L_M}{\phi_1} - c \qquad (5)$$

Desgleichen läßt sich durch Messung der Gesamtphasendrehung $\phi_2$ die Strömungsgeschwindigkeit $V_M$ nach der Formel (3) berechnen, wenn die Schallgeschwindigkeit c bekannt ist:

$$V_M = c - \frac{\omega_M \cdot L_M}{\phi_2} \qquad (6)$$

Die Schallgeschwindigkeit c im Medium ist aber nicht konstant; sie ändert sich in Abhängigkeit von den Eigenschaften des Mediums, insbesondere von dessen Temperatur und Dichte. Durch die abwechselnde Messung der Gesamtphasendrehungen in der Strömungsrichtung und gegen die Strömungsrichtung ist es jedoch möglich, durch gemeinsame Auswertung der Meßergebnisse die Strömungsgeschwindigkeit $V_M$ unabhängig von der Schallgeschwindigkeit c im Medium zu ermitteln. Addiert man die obigen Gleichungen (5) und (6), so erhält man:

$$2V_M = \frac{\omega_M \cdot L_M}{\phi_1} - \frac{\omega_M \cdot L_M}{\phi_2} \qquad (7)$$

$$V_M = \frac{\phi_2 - \phi_1}{\phi_2 \cdot \phi_1} \cdot \frac{\omega_M \cdot L_M}{2} \qquad (8)$$

Setzt man für $\phi_1$ und $\phi_2$ die entsprechenden Ausdrücke nach den Gleichungen (2) und (4) ein, so ergibt sich für die zu messende Strömungsgeschwindigkeit:

5

$$V_M = \frac{\varphi_{R2} - \varphi_{R1}}{(\varphi_{R2}+m_2 \cdot 2\pi)(\varphi_{R1}+m_1 \cdot 2\pi)} \cdot \frac{\omega_M \cdot L_M}{2} \qquad (9)$$

Ein bevorzugtes Verfahren zur Bestimmung der Anzahl $m_1$ bzw. $m_2$ der ganzen Wellenlängen auf der Strecke $L_M$ zwischen den beiden Ultraschallwandlern wird später beschrieben. Diese Bestimmung kann mit verhältnismäßig geringer Meßgenauigkeit erfolgen. Ferner genügt die Bestimmung in einer Richtung, denn da bei den vorkommenden Strömungsgeschwindigkeiten die Laufzeitunterschiede sehr klein sind, gilt in der Regel $m_1 = m_2 = m$. Zur Bestimmung der Strömungsgeschwindigkeit $V_M$ ist dann noch die Messung der Restphasenwinkel $\phi_{R1}$ und $\phi_{R2}$ erforderlich, also der einfachen Phasenverschiebungen zwischen der Sendewechselspannung $U_S$ und der Empfangswechselspannung $U_E$. Die Genauigkeit, mit der die Strömungsgeschwindigkeit $V_M$ ermittelt werden kann, hängt somit bei diesem Meßverfahren von der Genauigkeit ab, mit der die Restphasenwinkel $\phi_{R1}$ und $\phi_{R2}$ gemessen werden können.

Nun ist nach der Formel (9) die Strömungsgeschwindigkeit $V_M$ der Differenz

$$\Delta\phi = \phi_{R2} - \phi_{R1}$$

der beiden Restphasenwinkel proportional. Bei den üblicherweise zu messenden Strömungsgeschwindigkeiten $V_M$ sind die Restphasenwinkel $\phi_{R1}$ und $\phi_{R2}$ von gleicher Größenordnung; ihr Unterschied ist nur der Deutlichkeit wegen in den Diagrammen A von Fig. 2 und Fig. 3 übertrieben groß dargestellt. Demzufolge ist auch die Phasendifferenz $\Delta\phi$ klein gegen den Betrag jedes Restphasenwinkels $\phi_{R1}$ und $\phi_{R2}$. Dadurch ergeben sich hohe Anforderungen an die Meßgenauigkeit bei der Messung der Restphasenwinkel $\phi_{R1}$ und $\phi_{R2}$, denn selbst kleine Fehler bei der Messung der beiden Restphasenwinkel wirken sich als relativ große Fehler auf die Differenz $\Delta\phi$ der beiden Restphasenwinkel aus.

Bei der in Fig. 1 dargestellten Meßanordnung erfolgt die Messung der Restphasenwinkel $\phi_{R1}$ und $\phi_{R2}$ auf digitalem Weg. Zu diesem Zweck wird die Empfangswechselspannung $U_E$ in der Empfangssignal-Aufbereitungsschaltung 20 in eine dazu phasengleiche Rechteckspannung $Q_E$ umgeformt, und an den Ausgang des Sendefrequenzgenerators 18 ist eine Sendesignal-Aufbereitungsschaltung 22 angeschlossen, in der die Sendewechselspannung $U_S$ in eine dazu phasengleiche Rechteckspannung $Q_S$ umgewandelt wird. Die Diagramme B und C von Fig. 2 zeigen die Rechteckspannungen $Q_S$ bzw. $Q_E$ für den Fall, daß sich die Ultraschallwelle zwischen den beiden Ultraschallwandlern 12 und 14 in der Strömungsrichtung ausbreitet, und die Diagramme B und C von Fig. 3 zeigen die Rechteckspannungen $Q_S$ bzw. $Q_E$ für den Fall, daß sich die Ultraschallwellen zwischen den beiden Ultraschallwandlern 12 und 14 gegen die Strömungsrichtung ausbreiten. Die Flanken der Rechteckspannungen fallen mit den Nulldurchgängen der Wechselspannungen zusammen, aus denen sie abgeleitet sind. Zwischen den einander entsprechenden Flanken, also beispielsweise zwischen den ansteigenden Flanken der Rechteckspannungen $Q_S$ und $Q_E$ besteht somit die gleiche Phasenverschiebung wie zwischen den einander entsprechenden Nulldurchgängen der Wechselspannungen $U_S$ und $U_E$; diese Phasenverschiebung entspricht also im Fall von Fig. 2 dem Restphasenwinkel $\phi_{R1}$ und im Fall von Fig. 3 dem Restphasenwinkel $\phi_{R2}$.

Wie aus dem Zeitdiagramm von Fig. 2 ersichtlich ist, entspricht der Restphasenwinkel $\phi_{R1}$ einem definierten Zeitabstand $\Delta t_1$ zwischen den einander entsprechenden Flanken der Rechteckspannungen $Q_S$ und $Q_E$, denn bei der bekannten Kreisfrequenz $\omega_M$ gilt die Beziehung

$$\phi_{R1} = \omega_M \cdot \Delta t_1 \qquad (10)$$

Desgleichen entspricht nach dem Zeitdiagramm von Fig. 3 der Restphasenwinkel $\phi_{R2}$ einem genau definierten Zeitabstand $\Delta t_2$ zwischen den einander entsprechenden Flanken der Rechteckspannungen $Q_S$ und $Q_E$ nach der Beziehung

$$\phi_{R2} = \omega_M \cdot \Delta t_2 \qquad (11)$$

Zur Messung der Restphasenwinkel $\phi_{R1}$, $\phi_{R2}$ genügt daher die Messung der dazu proportionalen Zeitabstände $\Delta t_1$ bzw. $\Delta t_2$.

Die Ausgänge der beiden Signalaufbereitungsschaltungen 20 und 22 sind mit den beiden Eingängen eines Phasendetektors 24 verbunden, der am Ausgang eine Folge von Rechteckimpulsen $I_M$ abgibt, die in den Diagrammen D von Fig. 2 und Fig. 3 dargestellt sind und nachfolgend als Meßimpulse bezeichnet werden. Die Impulsfolgefrequenz der Meßimpulse $I_M$ entspricht der vom Sendegenerator 18 erzeugten

EP 0 378 651 B1

Frequenz $f_M$, die nachfolgend Meßfrequenz genannt wird. Jeder Meßimpuls $I_M$ hat eine Dauer $T_I$, die dem Zeitabstand $\Delta t_1$ bzw. $\Delta t_2$ Zwischen den ansteigenden Flanken der beiden Rechteckspannungen $Q_S$ und $Q_E$ in den Diagrammen B und C entspricht. Eine solche Rechteckimpulsfolge läßt sich auf sehr einfache Weise mit Hilfe eines Flipflops erzeugen, das durch jede ansteigende Flanke der Rechteckspannung $Q_S$ gesetzt und durch jede ansteigende Flanke der Rechteckspannung $Q_E$ rückgesetzt wird.

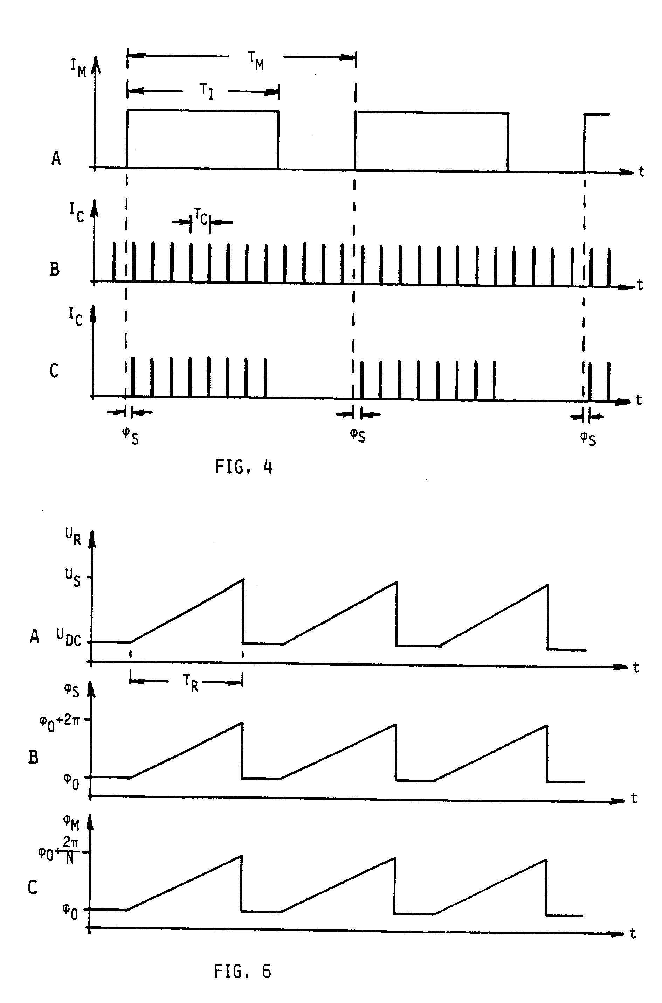

Zur Messung der den Restphasenwinkeln $\phi_{R1}$, $\phi_{R2}$ proportionalen Zeitabstände $\Delta t_1$ bzw. $\Delta t_2$ ist also die Dauer $T_I$ der Meßimpulse $I_M$ zu messen. Diese Zeitmessung geschieht bei der Meßanordnung von Fig. 1 auf digitalem Wege, wie anhand der Diagramme von Fig. 4 erläutert wird, wo eine vom Phasendetektor 24 abgegebene Folge von Meßimpulsen $I_M$ der Dauer $T_I$ nochmals im Diagramm A dargestellt ist. Der Ausgang des Phasendetektors 24 ist mit dem Steuereingang einer Torschaltung 26 verbunden, deren Signaleingang an den Ausgang eines Zählfrequenzgenerators 28 angeschlossen ist. Der Zählfrequenzgenerator 28 erzeugt eine Folge von Zählimpulsen $I_C$, deren Folgefrequenz $f_C$ wesentlich größer als die Meßfrequenz $f_M$ ist. Als Beispiel ist im Diagramm B von Fig. 4 eine solche Folge von Zählimpulsen $I_C$ dargestellt. Der Zeitabstand der Zählimpulse $I_C$ entspricht der Periodendauer $T_C$ bei der Zählfrequenz $f_C$. Der Deutlichkeit wegen ist im Diagramm B von Fig. 4 die Periodendauer $T_C$ der Zählimpulsfolge $I_C$ im Vergleich zur Periodendauer $T_M$ der Meßimpulse $I_M$ des Diagramms A übertrieben groß dargestellt.

Der Ausgang der Torschaltung 26 ist mit dem Zähleingang eines Zählers 30 verbunden, dessen Stufenausgänge mit entsprechenden Eingängen einer Auswerteschaltung 32 verbunden sind, die beispielsweise ein geeignet programmierter Mikrocomputer sein kann.

Die Torschaltung 26 ist so ausgebildet, daß sie für die Dauer jedes an ihren Steuereingang angelegten Meßimpulses $I_M$ geöffnet ist und im geöffneten Zustand die vom Zählfrequenzgenerator 28 kommenden Zählimpulse $I_C$ Zum Zähler 30 durchläßt, wie im Diagramm C von Fig. 4 gezeigt ist. Wenn kein Meßimpuls $I_M$ am Steuereingang der Torschaltung 26 anliegt, sperrt diese die Übertragung der Zählimpulse $I_C$ zum Zähler 30. Die von der Torschaltung 26 während der Dauer jedes Meßimpulses $I_M$ durchgelassenen Zählimpulse werden im Zähler 30 gezählt, so daß dieser einen Zählerstand anzeigt, der der Anzahl der während dieser Dauer vom Zählfrequenzgenerator 28 abgegebenen Zählimpulse entspricht. Somit ist dieser Zählerstand ein Maß für die Dauer des Meßimpulses $I_M$. Nach dem Ende jedes Meßimpulses $I_M$ wird der Zählerstand des Zählers 30 zu der Auswerteschaltung 32 übertragen und der Zähler 30 wieder auf Null zurückgestellt.

Somit empfängt die Auswerteschaltung 32 vom Zähler 30 fortlaufend Zählerstände, die die Dauer der vom Phasendetektor 24 gelieferten Meßimpulse $I_M$ darstellen. Wenn der Richtungsumschalter 16 in der Stellung 1 (Fig. 1) steht, sind die vom Zähler 30 gelieferten Zählerstände ein Meßwert für den Restphasenwinkel $\phi_{R1}$. Wenn der Richtungsumschalter 16 in die andere Stellung gebracht ist, sind die vom Zähler 30 gelieferten Zählerstände ein Meßwert für den Restphasenwinkel $\phi_{R2}$.Aus diesen beiden Meßwerten kann die Auswerteschaltung 32 nach der obigen Formel (9) die Strömungsgeschwindigkeit $V_M$ unabhängig von der Schallgeschwindigkeit c im Medium berechnen.

Die Diagramme von Fig. 4 lassen auch das grundsätzliche Problem erkennen, das durch den Quantisierungsfehler des digitalen Zählverfahrens verursacht wird: Die Auflösung der Zeitmessung, d.h. die kleinste noch unterscheidbare Zeitdifferenz, entspricht der Periode $T_C$ der Zählfrequenz $f_C$. Zur Erhöhung der Auflösung und damit der Meßgenauigkeit wäre es daher erforderlich, die Zählfrequenz möglichst hoch zu wählen. Dieser Lösung sind aber durch den erforderlichen Aufwand Grenzen gesetzt. Bei den in der Praxis zu messenden Strömungsgeschwindigkeiten liegen bei den verwendeten Ultraschallfrequenzen die den Restphasenwinkeln $\phi_{R1}$, $\phi_{R2}$ entsprechenden Impulsdauern $T_I$ der Meßimpulse $T_M$ in der Größenordnung von Mikrosekunden, und die nach der Formel (9) zu erfassenden Phasendifferenzen $\Delta\phi$ zwischen den Restphasenwinkein entsprechen Bruchteilen einer Nanosekunde. Es wären daher außerordentlich hohe Zählfrequenzen $f_C$ erforderlich, um jede Impulsdauer $T_I$ mit einer ausreichend großen Anzahl von Zählimpulsen $I_C$ auszuzählen.

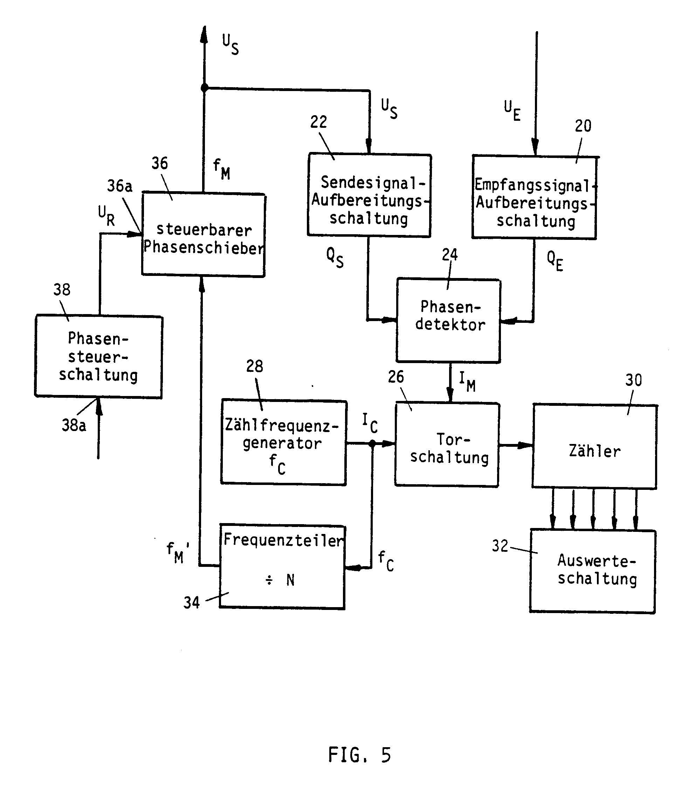

Fig. 5 zeigt das Blockschaltbild eines Teils der Meßanordnung von Fig. 1 bei einer abgeänderten Ausführungsform, die mit verhältnismäßig niedriger Zählfrequenz $f_C$ eine beträchtliche Erhöhung der Auflösung bei der digitalen Phasenmessung und demzufolge eine Erhöhung der Meßgenauigkeit bei der Messung der Strömungsgeschwindigkeit $V_M$ ergibt. Soweit die Bestandteile der Meßanordnung von Fig. 5 denjenigen der Meßanordnung von Fig. 1 entsprechen, sind sie mit den gleichen Bezugszeichen wie in Fig. 1 bezeichnet, und sie werden nicht nochmals beschrieben.

So zeigt Fig. 5 nochmals die beiden Signalaufbereitungsschaltungen 20 und 22, den Phasendetektor 24, die Torschaltung 26, den Zählfrequenzgenerator 28, den Zähler 30 und die Auswerteschaltung 32. Die Meßanordnung von Fig. 5 unterscheidet sich von derjenigen von Fig. 1 dadurch, daß die Meßfrequenz $f_M$ von der Zählfrequenz $f_C$ abgeleitet wird, und zwar in besonderer Weise derart, daß die Meßfrequenz und die Zählfrequenz konstant bleiben, daß aber zusätzlich die Startphase $\phi_S$ (Fig. 4), die die Zählimpulse $I_C$ beim

7

Beginn jedes Zählvorgangs in bezug auf die Phase der Meßimpulse $I_M$ haben, kontinuierlich gedreht wird, so daß nach n Messungen eine Phasendrehung um $2\pi$, also um eine volle Periode der Zählfrequenz $f_C$ erreicht ist.

Zu diesem Zweck ist an den Ausgang des Zählfrequenzgenerators 28 ein Frequenzteiler 34 mit dem Teilerfaktor N angeschlossen. Der Teilerfaktor N bestimmt das Verhältnis Zwischen der Zählfrequenz $f_C$ und der Ausgangsfrequenz $f_M'$ des Frequenzteilers 34. Wenn beispielsweise der Zählfrequenzgenerator 28 die Zählfrequenz $f_C = 7$ MHz erzeugt und der Frequenzteiler 34 den Teilerfaktor N = 128 hat, erhält man eine Frequenz $f_M'$ von etwa 55 kHz.

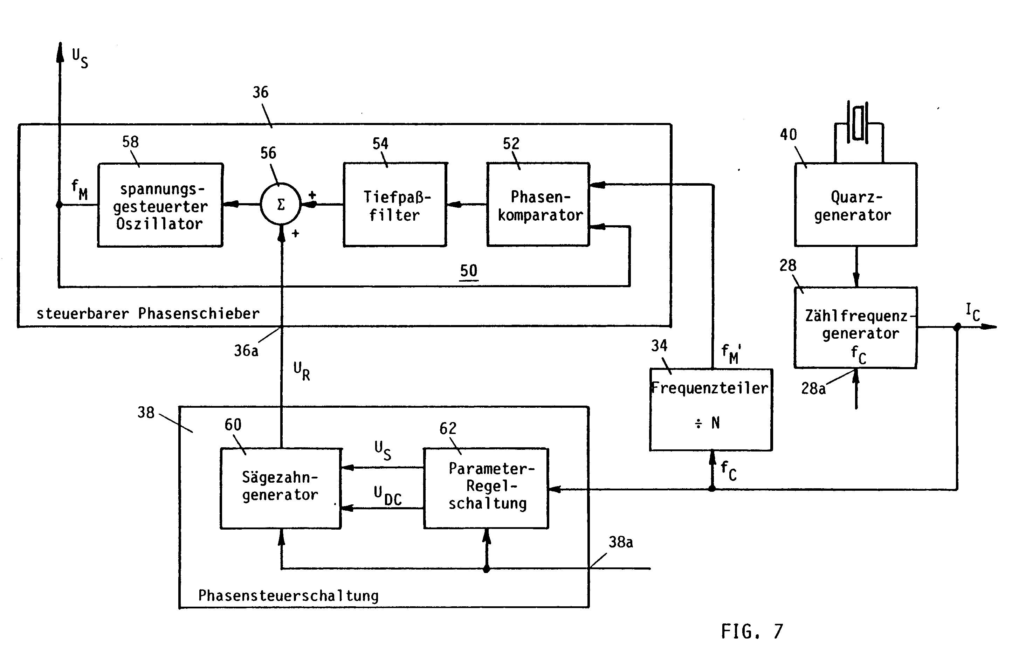

Dem Frequenzteiler 34 ist ein steuerbarer Phasenschieber 36 nachgeschaltet, der an seinem Ausgang eine Wechselspannung mit der Frequenz $f_M$ abgibt, die gegenüber der seinem Eingang zugeführten Wechselspannung mit der Frequenz $f_M'$ eine Phasenverschiebung aufweist, die von einer an seinen Steuereingang 36a angelegten Phasensteuerspannung abhängt. Der Steuereingang 36a ist mit dem Ausgang einer Phasensteuerschaltung 38 verbunden, die nach jeder Auslösung durch ein an einen Auslöseeingang 38a angelegtes Auslösesignal am Ausgang eine Rampenspannung $U_R$ mit dem im Diagramm A von Fig. 6 dargestellten Zeitlichen Verlauf abgibt. Die Rampenspannung $U_R$ steigt während einer Zeitdauer $T_R$ linear von einem Wert $U_{DC}$ auf einen Wert $U_S$ an und springt dann wieder auf den Wert $U_{DC}$ zurück. Die Zeitdauer $T_R$ entspricht n Perioden der Meßfrequenz $f_M$; es gilt also die Beziehung:

$$T_R = n \cdot T_M = \frac{n}{f_M} \qquad (12)$$

Die Rampenspannung $U_R$ ist so bemessen, daß sie die Startphase $\phi_S$, die die Zählimpulsfolge $I_C$ gegenüber dem Beginn jedes Meßimpulses $I_M$ aufweist, im Verlauf der Zeitdauer $T_R$, also über n aufeinanderfolgende Meßimpulse $I_M$, um $2\pi$, also eine volle Periode der Zählfrequenz $f_C$, dreht. Somit ergibt sich der im Diagramm B von Fig. 6 dargestellte zeitliche Verlauf der Startphase $\phi_S$. Dem Anfangswert $U_{DC}$ der Rampenspannung $U_R$ entspricht eine konstante Startphase $\phi_0$, und dem Endwert $U_S$ der Rampenspannung $U_R$ entspricht die Startphase $\phi_0 + 2\pi$. Da in jeder Periode der Meßfrequenz $f_M$ ein Phasenmeßvorgang durch Zählung der Zählimpulse $I_C$ im Zähler 30 durchgeführt wird, verschiebt sich die Startphase $\phi_S$ kontinuierlich von Meßvorgang zu Meßvorgang. Sie hat bei der p-ten Messung im Verlauf der Zeitdauer $T_R$ den Wert

$\phi_S (p) = p \cdot \frac{2\pi}{n} + \phi_0 \qquad (13)$
(mit p = 0...n)

Nun nimmt jedoch der Phasenschieber 36 die Phasenverschiebung nicht an der Zählfrequenz $f_C$, sondern an der daraus abgeleiteten Frequenz $f_M'$ vor, für die gilt:

$$f_M' = \frac{f_C}{N} \qquad (14)$$

Zwischen der Startphase $\phi_S$ bei der Zählfrequenz $f_C$ und der Phase $\phi_M$ bei der Meßfrequenz $f_M$ besteht die Beziehung

$\phi_S = N \cdot \phi_M \qquad (15)$

Die vom Phasenschieber 36 zu erzeugende Phasenverschiebung muß also um den Faktor N kleiner sein als die gewünschte Phasenverschiebung der Startphase $\phi_S$, wie im Diagramm C von Fig. 6 dargestellt ist. Zwischen den Werten $U_{DC}$ und $U_S$ der Rampenspannung $U_R$ ändert sich die vom Phasenschieber 44 erzeugte Phasenverschiebung um $2\pi/N$. Sie hat bei der p-ten Messung im Verlauf der Zeitdauer $T_R$ den Wert

$$\varphi_M\ (p)\ =\ p\cdot\frac{2\,\pi}{N\cdot n}\ +\ \varphi_0 \qquad\qquad (16)$$

$$(\text{mit}\ p\ =\ 0\ldots n)$$

Die kontinuierliche Phasenverschiebung zwischen den Frequenzen $f_M{}'$ und $f_M$ während der Dauer $T_R$ jeder Rampe der Rampenspannung $U_R$ kommt einer Frequenzänderung gleich. Es gilt dann

$$f_M\ =\ f_M{}'\ (1\ +\ \frac{1}{N\cdot n}) \qquad\qquad (17)$$

Da jedoch $N\cdot n \gg 1$ ist, gilt näherungsweise

$f_M \approx f_M{}'$ (18)

Die Ausgangsspannung des Phasenschiebers 36 kann unmittelbar die Sendewechselspannung $U_S$ darstellen. Der Sendefrequenzgenerator 18 von Fig. 1 ist also bei der Meßanordnung von Fig. 5 durch den Frequenzteiler 34 und den Phasenschieber 36 in Verbindung mit der Phasensteuerschaltung 38 ersetzt.

Die kontinuierliche Änderung der Startphase $\phi_S$ um $2\pi$ im Verlauf von n aufeinanderfolgenden Messungen ergibt die Wirkung, daß während eines Teils der Messungen eine bestimmte Anzahl k und während der übrigen Messungen eine um 1 größere Anzahl k + 1 von Zählimpulsen $I_C$ während der Dauer $T_I$ jedes Meßimpulses $T_M$ gezählt wird. Durch geeignete Auswertung der in jedem Meßzyklus der Dauer $T_R$ erhaltenen n Meßwerte läßt sich die Auflösung und damit die Meßgenauigkeit beträchtlich erhöhen, ohne daß die Zählfrequenz $f_C$ entsprechend erhöht wird. Die kontinuierliche Phasenverschiebung um $2\pi$ in n aufeinanderfolgenden Stufen entspricht gewissermaßen einer Unterteilung des der Zählperiode $T_C$ entsprechenden Quantisierungsschrittes in n Teilschritte. Könnte man alle sonstigen zufälligen Fehler, wie thermisches Rauschen, Strömungsrauschen usw., vollständig ausschalten, so würde sich eine Erhöhung der Auflösung um den Faktor n ergeben.

Die bevorzugte Auswertung der auf diese Weise erhaltenen Meßergebnisse besteht darin, daß der Mittelwert der im Verlauf jedes Meßzyklus erhaltenen n Zählerstände gebildet wird. Der dem Mittelwert entsprechende Restphasenwinkel wird dann zur Berechnung der Strömungsgeschwindigkeit $V_M$ nach der Formel (9) verwendet.

Vorzugsweise erfolgt die Auslösung der Phasensteuerschaltung 38 im Takt der Umsteuerung des Richtungsumschalters 16. Man erhält dann abwechselnd in einem Meßzyklus der Dauer $T_R$ die n Meßwerte für die Messung mit der Strömungsrichtung und im folgenden Meßzyklus die n Meßwerte für die Messung gegen die Strömungsrichtung. Somit stehen nach jeweils zwei aufeinanderfolgenden Meßzyklen die beiden Restphasenwinkel, die für die Berechnung der Strömungsgeschwindigkeit nach der Gleichung (9) benötigt werden, mit der erhöhten Meßgenauigkeit zur Verfügung.

In Fig. 7 ist ein Ausführungsbeispiel des steuerbaren Phasenschiebers 36 in näheren Einzelheiten dargestellt. Fig. 7 zeigt auch den Zählfrequenzgenerator 28, den Frequenzteiler 34 und die Phasensteuerschaltung 38.

Der Zählfrequenzgenerator 28 ist durch einen Quarzgenerator 40 phasenstarr synchronisiert. Durch diese Synchronisation ist gewährleistet, daß die Startphase über die n Messungen in jedem Meßzyklus der Dauer $T_R$ genau um eine ganze Periode $2\pi$ der Zählfrequenz $f_C$ gedreht wird. Ferner ist der Zählfrequenzgenerator 28 vorzugsweise so ausgebildet, daß die Zählfrequenz $f_C$ in einem größeren Bereich, beispielsweise zwischen 2 und 11 MHz, einstellbar ist. Zur Erzielung einer phasenstarren Regelung in Verbindung mit einer einstellbaren Frequenz kann der Zählfrequenzgenerator 28 in bekannter Weise mit einer Phasenverriegelungsschaltung versehen sein, die unter der Bezeichnung PLL-Schaltung ("phase locked loop") bekannt ist. Eine solche PLL-Schaltung enthält einen digitalen Frequenzteiler, dessen Teilerfaktor durch ein digitales Steuersignal einstellbar ist und die am Ausgang abgegebene Frequenz bestimmt. In Fig. 7 ist angedeutet, daß das digitale Steuersignal einem Steuereingang 28a des Zählfrequenzgenerators 28 zugeführt wird.

Der Phasenschieber 36 ist ebenfalls durch eine PLL-Schaltung 50 gebildet. Die PLL-Schaltung 50 enthält in Kaskade einen Phasenkomparator 52, ein Tiefpaßfilter 54, eine Summierschaltung 56 und einen spannungsgesteuerten Oszillator 58, der auch unter der Bezeichnung VCO ("voltage controlled oscillator") bekannt ist. Ein solcher spannungsgesteuerter Oszillator gibt bekanntlich am Ausgang eine Wechselspannung ab, deren Frequenz von einer an seinen Steuereingang angelegten Frequenzsteuerspannung abhängt.

Der Phasenkomparator 52 empfängt an einem Eingang das Ausgangssignal des Frequenzteilers 34 und am anderen Eingang die Ausgangswechselspannung des spannungsgesteuerten Oszillators 58. Er liefert am Ausgang ein Regelabweichungssignal, das von der Phasendifferenz zwischen seinen beiden Eingangssignalen abhängt. Das Regelabweichungssignal wird nach Filterung im Tiefpaßfilter 54 dem einen Eingang der Summierschaltung 56 zugeführt, die am anderen Eingang die Rampenspannung $U_R$ vom Ausgang der Phasensteuerschaltung 38 empfängt. Die in der Summierschaltung 56 gebildete Summenspannung wird dem Steuereingang des spannungsgesteuerten Oszillators 58 als Frequenzsteuerspannung zugeführt.

Die PLL-Schaltung 50 erzwingt die Frequenzgleichheit zwischen der dem einen Eingang des Phasenkomparators 52 zugeführten Ausgangsfrequenz $f_M'$ des Frequenzteilers 34 und der dem anderen Eingang des Phasenkomparators 52 zugeführten Ausgangsfrequenz $f_M$ das spannungsgesteuerten Oszillators 58. Damit diese Frequenzgleichheit bestehen bleibt, muß die dem spannungsgesteuerten Oszillator 58 zugeführte Frequenzsteuerspannung stets den der Frequenz $f_M$ entsprechenden konstanten Wert haben. Nun ergibt sich aber diese Frequenzsteuerspannung aus der Summe der kontinuierlich ansteigenden Rampenspannung $U_R$ und der Ausgangsspannung des Phasenkomparators 52. Damit die Frequenzsteuerspannung konstant bleibt, muß sich also die Ausgangsspannung des Phasenkomparators 52 gegensinnig zu der Rampenspannung $U_R$ ändern. Die erforderliche Änderung der Ausgangsspannung des Phasenkomparators 52 ergibt sich als Folge einer Änderung der gegenseitigen Phasenlage seiner beiden Eingangsspannungen. Somit erzwingt die PLL-Schaltung eine fortlaufende Verschiebung der Phasenlage der Ausgangswechselspannung des spannungsgesteuerten Oszillators 58 gegenüber der Phasenlage der Ausgangswechselspannung des Frequenzteilers 34 zum Ausgleich der stetig ansteigenden Rampenspannung $U_R$. Die dargestellte Ausführungsform des Phasenschiebers 36 ergibt also genau die zuvor anhand von Fig. 5 geschilderte Wirkung.

Die Phasensteuerschaltung 38 von Fig. 7 enthält einen Sägezahngenerator 60 und eine Parameter-Regelschaltung 62. Die Parameter-Regelschaltung 62 bestimmt insbesondere die beiden Spannungswerte $U_{DC}$ und $U_S$, zwischen denen sich die Rampenspannung $U_R$ ändert. Mit dem Parameter $U_{DC}$ läßt sich der konstante Phasenwinkel $\phi_0$ einstellen. Mit dem Parameter $U_S$ läßt sich der maximale Phasenhub über die Dauer $T_R$ jeder ansteigenden Flanke der Rampenspannung $U_R$ einstellen. Die Parameter-Regelschaltung 62 empfängt auch die Zählfrequenz $f_C$, damit die Auslösung jeder Rampe durch das dem Eingang 38a zugeführte Auslösesignal in einer definierten zeitlichen Beziehung zu den Zählimpulsen erfolgt.

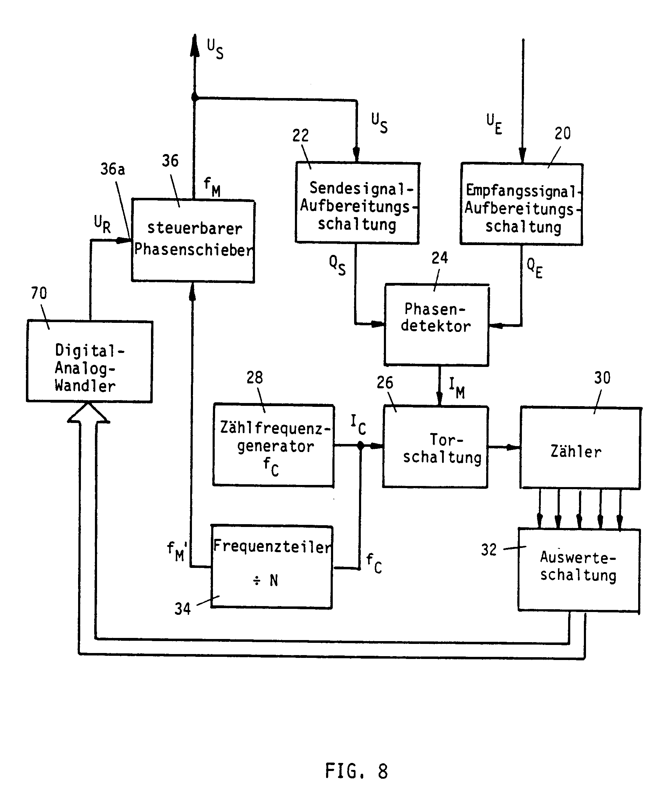

Fig. 8 zeigt eine abgeänderte Ausführungsform der Anordnung von Fig. 5, bei welcher die Phasensteuerschaltung durch einen Digital-Analog-Wandler 70 gebildet ist, der eine von der Auswerteschaltung 32 gelieferte digitale Codegruppe in eine Analogspannung umsetzt, die als Phasensteuerspannung an den Eingang 36a des Phasenschiebers 36 angelegt wird. Der die Auswerteschaltung 32 bildende Mikrocomputer kann daher die Änderung der Startphase $\phi_S$ im Verlauf eines Meßzyklus nach einem vorgegebenen Programm steuern. Auf diese Weise kann der genaue Meßwert des Restphasenwinkels auch auf andere Weise als durch Mittelwertbildung über n aufeinanderfolgende Messungen erhalten werden. Insbesondere läßt sich eine sukzessive Approximation durchführen, durch die man sich dem Übergang von k Zählimpulsen auf k + 1 Zählimpulse pro Meßimpulsdauer $T_I$ durch ein Wägeverfahren annähert. Dabei wird der Phasenschieber 36 vom Mikrocomputer 32 über den Digital-Analog-Wandler 70 in diskreten Schritten angesteuert. Man kann dann eine Erhöhung der Auflösung um den Faktor $2^P$ in p Schritten erreichen.

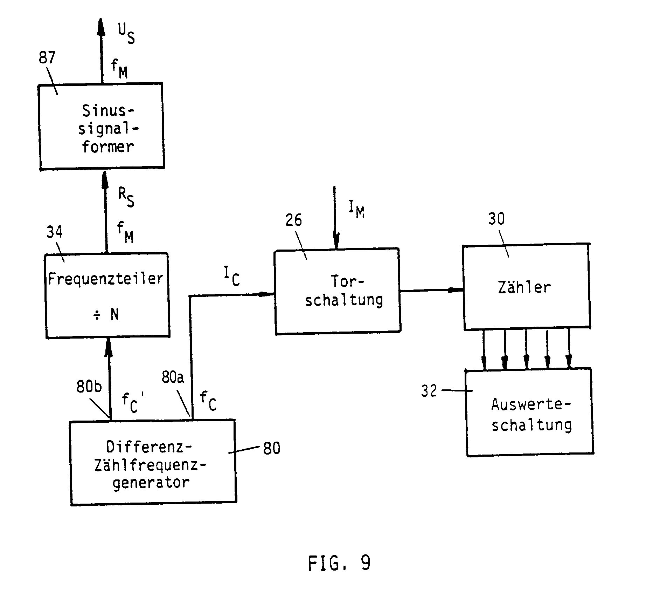

In Fig. 9 ist eine weitere Ausführungsform der Durchflußmeßanordnung dargestellt, mit der eine kontinuierliche Änderung der Startphase $\phi_S$ um $2\pi$ im Verlauf von n aufeinanderfolgenden Meßimpulsen $I_M$ durch Verwendung von zwei gegeneinander verschobenen Frequenzen erzielt wird. Fig. 9 zeigt wieder die Torschaltung 26, an deren Steuereingang die Meßimpulse $I_M$ der Dauer $T_I$ und der Folgefrequenz $f_M$ angelegt werden, sowie den an den Ausgang der Torschaltung 26 angeschlossenen Zähler 30 und die Auswerteschaltung 32. Die Zählimpulse $I_C$ mit der Zählfrequenz $f_C$ werden vom Ausgang 80a eines Differenz-Zählfrequenzgenerators 80 geliefert, der an einem weiteren Ausgang 80b eine Frequenz $f_C'$ abgibt, die sich von der Zählfrequenz $f_C$ um eine Differenzfrequenz $\Delta f$ unterscheidet:

$$f_C' = f_C \pm \Delta f \qquad (19)$$

Die Meßfrequenz $f_M$ wird durch Frequenzteilung in dem Frequenzteiler 34 mit dem Teilerfaktor N aus der Frequenz $f_C'$ abgeleitet. Demzufolge ist die Zählfrequenz $f_C$ kein ganzzahliges Vielfaches der Meßfrequenz $f_M$, so daß sich eine fortlaufende Phasenverschiebung der Startphase $\phi_S$ der Zählung gegenüber den Meßimpulsen $I_M$ in aufeinanderfolgenden Perioden der Meßfrequenz $f_M$ ergibt. Durch geeignete Bemessung

der Differenzfrequenz $\Delta f$ läßt sich erreichen, daß sich die Startphase $\phi_S$ in n aufeinanderfolgenden Perioden der Meßfrequenz $f_M$ gerade um $2\pi$, also um eine volle Periode der Zählfrequenz $f_C$ ändert. Dies ist dann der Fall, wenn die Differenzfrequenz $\Delta f$ den folgenden Wert hat:

$$\Delta f = \frac{f_M}{n} \qquad\qquad (20)$$

Wenn beispielsweise die Meßfrequenz $f_M$ = 55,6 kHz beträgt und die Phasendrehung um $2\pi$ in n = 1000 aufeinanderfolgenden Perioden der Meßfrequenz $f_M$ erhalten werden soll, beträgt die Differenzfrequenz:

$$\Delta f = \frac{55,6 \text{ kHz}}{1000} = 55,6 \text{ Hz} \qquad\qquad (21)$$

Für das Verhältnis zwischen der Zählfrequenz $f_C$ und der Meßfrequenz $f_M$ gilt:

$$f_C = f_C' \pm \frac{f_M}{n} \qquad\qquad (22)$$

$$f_C = N \cdot f_M \pm \frac{f_M}{n} \qquad\qquad (23)$$

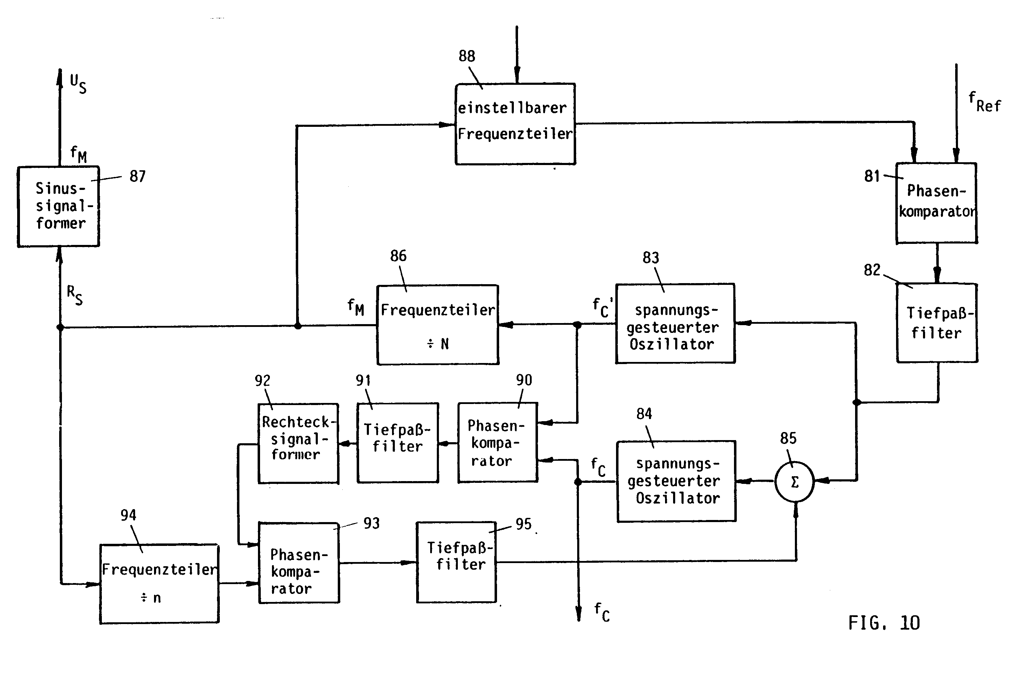

Fig. 10 zeigt ein Ausführungsbeispiel des Differenz-Zählfrequenzgenerators 80 von Fig. 9, mit dem zwei Frequenzen $f_C$ und $f_C'$ erhalten werden können, die sich exakt um die gewünschte Differenzfrequenz $\Delta f$ unterscheiden. Dieser Differenz-Zählfrequenzgenerator enthält einen Phasenkomparator 81, der an einem Eingang eine Referenzfrequenz $f_{Ref}$ empfängt, die vorzugsweise von einem Quarzoszillator abgeleitet ist und beispielsweise 1 kHz beträgt. Das Ausgangssignal des Phasenkomparators 81 wird nach Filterung in einem Tiefpaßfilter 82 einem ersten spannungsgesteuerten Oszillator 83 direkt und einem zweiten spannungsgesteuerten Oszillator 84 über eine Summierschaltung 85 zur Frequenzsteuerung zugeführt. Der spannungsgesteuerte Oszillator 83 liefert am Ausgang die Frequenz $f_C'$, die nach Frequenzteilung mit dem Teilerfaktor N in einem Frequenzteiler 86 (der dem Frequenzteiler 34 von Fig. 9 entspricht) die Meßfrequenz $f_M$ ergibt. Da die Ausgangsspannung $R_S$ des Frequenzteilers 86 eine Rechteckspannung ist, wird sie in einem Signalformer 87 in eine Sinusspannung der gleichen Frequenz $f_M$ umgeformt, die dann die Sendewechselspannung $U_S$ bildet.

Der Ausgang des Frequenzteilers 86 ist ferner über einen zweiten Frequenzteiler 88 mit dem zweiten Eingang des Phasenkomparators 81 verbunden. Auf diese Weise ist eine PLL-Schaltung bekannter Art gebildet, die die Meßfrequenz $f_M$ durch phasenstarre Regelung in einem durch den Teilerfaktor des zweiten Frequenzteilers 88 bestimmten Verhältnis zu der Referenzfrequenz $f_{Ref}$ hält. Der Teilerfaktor des Frequenzteilers 88 ist vorzugsweise digital einstellbar, so daß die Meßfrequenz $f_M$ in einem gewissen Bereich auf einen gewünschten Wert eingestellt werden kann. Dabei bleibt zwischen dem eingestellten Wert der Meßfrequenz $f_M$ und der Frequenz $f_C'$ stets das durch den Teilerfaktor N des Frequenzteilers 86 bestimmte konstante Verhältnis bestehen.

Der Ausgang des spannungsgesteuerten Oszillators 83 ist ferner mit dem einen Eingang eines Phasenkomparators 90 verbunden, dem am anderen Eingang das Ausgangssignal des anderen spannungsgesteuerten Oszillators 84 mit der Frequenz $f_C$ zugeführt wird. Der Ausgang des Phasenkomparators 90 ist über ein Tiefpaßfilter 91 mit einem Rechtecksignalformer 92 verbunden, der beispielsweise durch einen Schmitt-Trigger gebildet ist. Am Ausgang des Rechtecksignalformers wird ein Rechtecksignal mit der Frequenz

$$\Delta f = |f_C' - f_C| \qquad (24)$$

erhalten, das dem einen Eingang eines Phasenkomparators 93 zugeführt wird. Der andere Eingang des Phasenkomparators 93 empfängt das Ausgangssignal eines Frequenzteilers 94, der die Augangsfrequenz $f_M$ des Frequenzteilers 86 durch den Faktor n teilt. Der Ausgang des Phasenkomparators 93 ist über ein Tiefpaßfilter 95 mit dem zweiten Eingang der Summierschaltung 85 verbunden, deren Ausgangsspannung die Frequenzsteuerspannung für den spannungsgesteuerten Oszillator 84 bildet. Der spannungsgesteuerte Oszillator 84 liegt somit in einer Frequenzregelschleife, die seine Ausgangsfrequenz $f_C$ in einem konstanten Frequenzabstand $\Delta f$ zu der Ausgangsfreqenz $f_C'$ des spannungsgesteuerten Oszillators 83 hält, wobei dieser Frequenzabstand $\Delta f$ stets gleich der Ausgangsfrequenz des Frequenzteilers 94 gehalten wird. Somit gilt:

$$\Delta f = \frac{f_M}{n} \qquad\qquad (25)$$

$$f_C = N \cdot f_M \pm \frac{f_M}{n} \qquad\qquad (26)$$

Die Schaltung von Fig. 10 liefert somit am Ausgang des spannungsgesteuerten Oszillators 84 eine Zählfrequenz $f_C$, die die durch die Gleichung (23) gegebene Bedingung erfüllt.

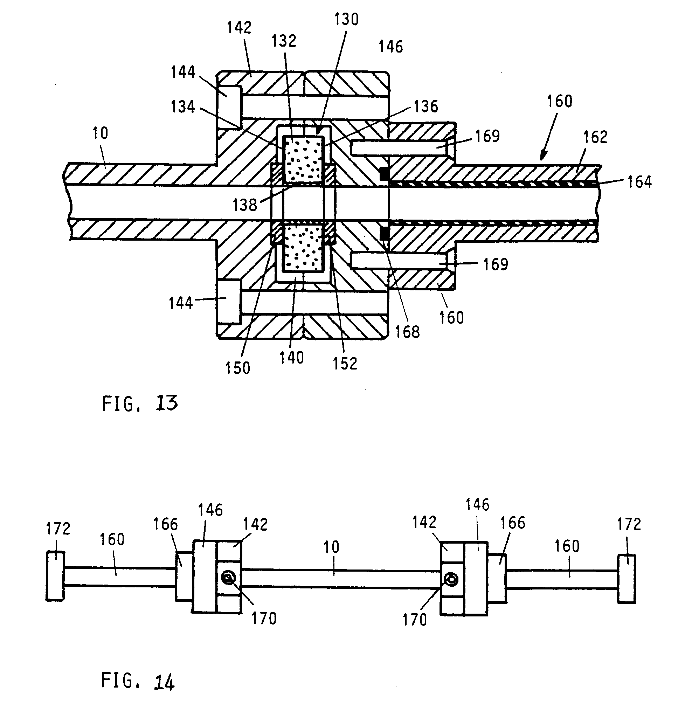

Bei allen bisher beschriebenen Ausführungsformen der Durchflußmeßanordnung werden die Zählimpulse kontinuierlich erzeugt, wobei jedoch zur Erhöhung der Meßgenauigkeit bei der Phasendifferenzmessung durch unterschiedliche Maßnahmen eine systematische Änderung der Startphase am Beginn jedes Meßzeitintervalls verursacht wird. Von diesen Ausführungsformen unterscheidet sich die in Fig. 13 dargestellte Ausführungsform der Durchflußmeßanordnung grundsätzlich dadurch, daß jeweils nur während der Dauer jedes Meßzeitintervalls ein Zählimpulszug mit der Folgefrequenz $f_C$ erzeugt wird, wobei die zur Erhöhung der Meßgenauigkeit erforderliche Beeinflussung der Startphase dadurch erfolgt, daß jeder Zählimpulszug am Beginn eines Meßzeitintervalls genau mit der Phasenlage einsetzt, mit der der vorhergehende Zählimpulszug am Ende des vorhergehenden Meßzeitintervalls beendet wurde.

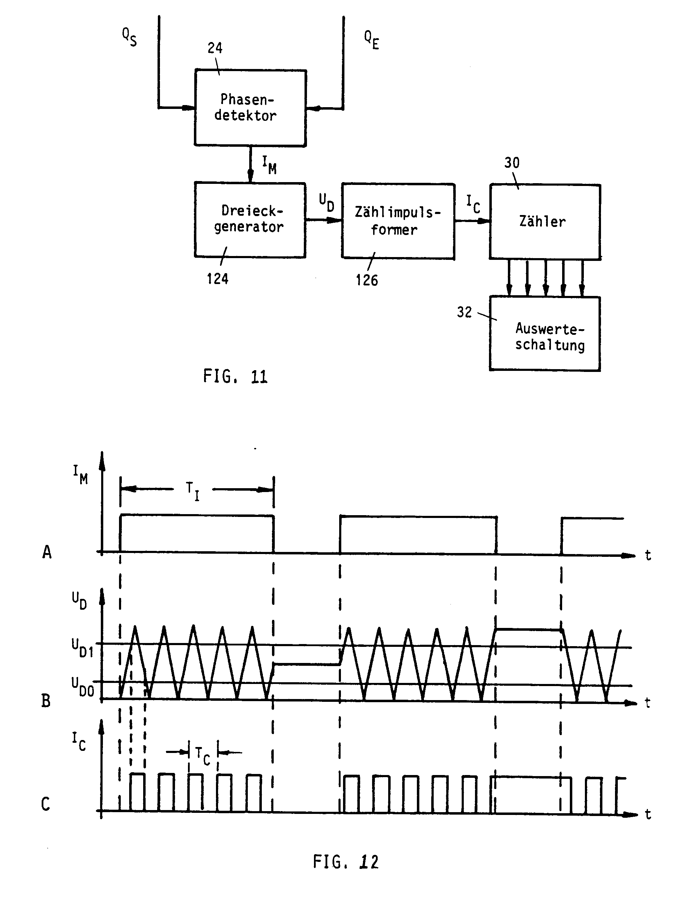

Fig. 11 zeigt wieder den Phasendetektor 24, den Zähler 30 und die Auswerteschaltung 32 von Fig. 1. Der Ausgang des Phasendetektors 24, an dem die Meßimpulse $I_M$ mit der Dauer $T_I$ erscheinen, ist mit einem Steuereingang eines Dreieckgenerators 124 verbunden. Die Ausgangsspannung $U_D$ des Dreieckgenerators 124 wird dem Eingang eines Zählimpulsformers 126 zugeführt, der an seinem Ausgang die Zählimpulse $I_C$ abgibt, die dem Zähler 30 zugeführt werden.

Die Funktionsweise der Schaltung von Fig. 11 soll anhand der Diagramme von Fig. 12 erläutert werden. In Fig. 12 zeigt das Diagramm A die vom Phasendetektor 24 abgegebenen Meßimpulse $I_M$, das Diagramm B die Ausgangsspannung $U_D$ des Dreieckgenerators 124 und das Diagramm C die vom Zählimpulsformer 126 zum Zähler 30 gelieferten Zählimpulse.

Der Dreieckgenerator 124 ist so ausgebildet, daß er eine Dreieckspannung mit der Frequenz $f_C$ nur dann erzeugt, wenn an seinem Steuereingang ein Meßimpuls $I_M$ anliegt. Mit Beendigung des Meßimpulses $I_M$ wird der Dreieckgenerator 124 angehalten, so daß er in einen Haltezustand gelangt. Dieser Haltezustand zeichnet sich dadurch aus, daß die Ausgangsspannung $U_D$ nicht zurückgesetzt wird, sondern den beim Anhalten erreichten Signalpegel beibehält. Dieser Signalpegel kann beispielsweise in einem Kondensator gespeichert werden. Beim Beginn des nächsten Meßimpulses $I_M$ wird der Haltezustand beendet, und der Dreieckgenerator 124 setzt die Erzeugung der Dreieckspannung von dem gespeicherten Signalpegel aus fort.

Der Zählimpulsformer 126 setzt die Ausgangsspannung $U_D$ des Dreieckgenerators 124 in dazu phasensynchrone Zählimpulse $I_C$ um. Dies kann auf einfache Weise dadurch erfolgen, daß die Erzeugung eines Zählimpulses ausgelöst wird, wenn die Spannung $U_D$ einen vorgegebenen oberen Schwellenwert $U_{D1}$ überschreitet, und daß der Zählimpuls beendet wird, wenn die Spannung $U_D$ einen vorgegebenen unteren Schwellenwert $U_{D2}$ unterschreitet. Somit gibt der Zählimpulsformer 126 während der Dauer jedes Meßimpulses $I_M$ an seinem Ausgang eine Anzahl von Zählimpulsen $I_C$ ab, die gleich der Anzahl der Perioden der während dieser Dauer erzeugten Dreieckspannung ist. Während der Pause zwischen zwei Meßimpulsen $I_M$ werden dagegen keine Zählimpulse erzeugt. Durch die Speicherung des Signalpegels der Spannung $U_D$ wird erreicht, daß die letzte Zählimpulsperiode $T_C$, die am Ende eines Meßzeitintervalls der Dauer $T_I$ begonnen, aber nicht mehr vollendet wurde, am Beginn des nächsten Meßzeitintervalls vervollständigt wird.

Mithin lassen sich bei diesen Zählverfahren die Dauern $T_I$ der im Verlauf eines Meßzyklus nacheinander auftretenden Meßimpulse $I_M$ gleichsam nahtlos aneinanderreihen und durch Aufsummieren der entsprechenden Zählergebnisse fehlerfrei ausmessen. Beispielsweise erscheinen im Diagramm C von Fig. 12 im ersten Meßzeitintervall fünf vollständige Zählimpulse $I_C$. Die unvollständige Impulslücke nach dem letzten Zählimpuls wird am Beginn des zweiten Meßzeitintervalls vollendet. Im zweiten Meßzeitintervall erscheinen ebenfalls fünf vollständige Zählimpulse sowie ein angefangener sechster Zählimpuls, der am Beginn des dritten Meßzeitintervalls vollendet wird. Wenn der Zähler 30 jeweils auf die ansteigenden Flanken der Zählimpulse $I_C$ anspricht, ergibt sich im ersten Meßzeitintervall der Zählerstand "5" und im zweiten Meßzeitintervall der Zählerstand "6". Es wird also ein sogenannter "Restphasenfehler", der im ersten Meßzeitintervall systembedingt entstanden ist, im zweiten Meßzeitintervall ausgeglichen. Allgemein gesprochen bedeutet dies, daß ein Restphasenfehler, der sich in mehreren aufeinanderfolgenden Meßzeitintervallen akkumuliert, in einem folgenden Meßzeitintervall kompensiert wird.

Bei allen zuvor beschriebenen Ausführungsformen des Durchflußmessers wird vorausgesetzt, daß sich die akustische Welle in der Richtung der Achse des Meßrohres 10 vom Sendewandler zum Empfangswandler ausbreitet. Selbstverständlich kann dies nicht nur durch die in Fig. 1 gezeigte Anordnung der Ultraschallwandler erreicht werden, sondern auch bekanntlich durch deren derartige Anbringung, daß die Hauptausbreitung der Ultraschallwellen nicht - wie in Fig. 1 - mit der Meßrohrachse zusammenfällt.

Die beiden Ultraschallwandler 12 und 14 von Fig. 1 müssen so ausgebildet sein, daß sie beim Betrieb als Sendewandler eine solche akustische Welle erzeugen können und daß sie beim Betrieb als Empfangswandler eine solche akustische Welle mit ausreichender Empfindlichkeit in ein elektrisches Empfangssignal umwandeln können. Außerdem ist es, insbesondere bei Durchflußmessern kleiner Nennweiten, erwünscht, daß der Strömungsquerschnitt des Durchflußmessers durch die Ultraschallwandler nicht beeinträchtigt wird. In Fig. 13 ist eine bevorzugte Ausführungsform eines Ultraschallwandlers dargestellt, der diese Bedingungen erfüllt.

Der in Fig. 13 dargestellte Ultraschallwandler 130 besteht aus einem ringförmigen Piezokristall 132, der an seinen beiden Stirnflächen mit Metallisierungen 134 und 136 versehen ist, die als Elektroden dienen. Der Piezokristall kann aus Blei-Zirkon-Titanat, Barium-Titanat oder einem anderen geeigneten piezoelektrischen Material bestehen. Der Ultraschallwandler 130 ist in einer Kammer 140 untergebracht, die durch Ausnehmungen in einem am Meßrohr 110 angebrachten Flansch 142 und in einer mittels Schraubenbolzen 144 am Flansch 142 befestigten ringförmigen Gegenplatte 146 gebildet ist. Die Gegenplatte 146 besteht aus dem gleichen Material wie das Meßrohr 10 und der Flansch 142, das vorzugsweise rostfreier Stahl ist.

Um zu verhindern, daß der Piezokristall 132 durch ein chemisch aggressives Medium angegriffen wird, ist auf seine innere Umfangsfläche eine Schutzschicht 138 aus einem gegen das chemisch aggressive Medium resistenten Material aufgebracht. Je nach der Art des chemisch aggressiven Mediums kann die Schutzschicht 138 aus Metall, wie Gold, Silber oder Titan, oder auch aus Glas, Kunststoff, Keramik oder dergleichen bestehen. Besonders günstig ist es, wenn das Material der Schutzschicht 138 eine Schallkennimpedanz hat, die zwischen der Schallkennimpedanz des Piezokristalls 132 und der Schallkennimpedarz des Mediums liegt, so daß die Schutzschicht zugleich eine akustische Impedanzanpassung bewirkt. Wenn das Medium nicht aggressiv ist, kann die Schutzschicht 138 fortgelassen werden, so daß dann die innere Umfangsfläche des Piezokristalls 132 in direktem Kontakt mit dem durch den Durchflußmesser strömenden Medium steht.

Der ringförmige Piezokristall 132 ist unter Einfügung von Dichtungsringen 150 und 152 zwischen dem Flansch 142 und der Gegenplatte 146 eingespannt. Die Dichtungsringe 150, 152 sowie der Piezokristall 132 mit der Schutzschicht 138, der Flansch 142 und die Gegenplatte 146 haben den gleichen Innendurchmesser wie das Meßrohr 10, so daß ein durchgehend gleichmäßiger Strömungsquerschnitt besteht, der durch den Einbau des Ultraschallwandlers nicht beeinträchtigt ist. Die Dichtungsringe 150, 152 dienen einerseits zur Abdichtung der Einspannstelle und andererseits zur akustischen Entkopplung des Ultraschallwandlers 130 von den sich in beiden Richtungen anschließenden Rohrabschnitten. Das Material der Dichtungsringe 150, 152 wird so gewählt, daß es diese beiden Aufgaben möglichst gut erfüllt und auch gegen die durch den Durchflußmesser strömenden Medien resistent ist. Zur Erzielung einer guten akustischen Entkopplung soll die Schallkennimpedanz der Dichtungsringe 150, 152 wesentlich kleiner als die Schallkennimpedanz des Meßrohres 10 sein. Als besonders gut geeignetes Material für die Dichtungsringe 150, 152 hat sich Viton erwiesen. Beim Zusammenbau des Flansches 142 und der Gegenplatte 146 erhalten die Dichtungsringe 150, 152 eine vorgewählte Pressung.

Damit der Ultraschallwandler 130 in dem Medium eine sich in der Achsrichtung ausbreitende akustische Welle erzeugt, wird er für die Phasenmessung durch die an seine Elektroden 134, 136 angelegte Sendewechselspannung $U_S$ so erregt, daß er radial schwingt, wobei sich sein Innendurchmesser und sein Außendurchmesser vorzugsweise phasengleich verändern. Die Änderungen des Innendurchmessers verursachen in dem Medium Druckschwankungen, die sich als Ultraschallwellen ausbreiten. Obwohl die Elektroden 134 und 136 parallel zu der gewünschten Schwingungsrichtung liegen, kann eine Radialschwingung dadurch erzeugt werden, daß die Frequenz $f_M$ der Sendewechselspannung $U_S$ gleich der Radialresonanzfrequenz des Piezokristalls 132 gemacht wird. Diese Radialresonanzfrequenz ist niedriger als die Longitudinalresonanzfrequenz, bei der der Piezokristall 132 parallel zur Achsrichtung, also senkrecht zu den Elektroden 134 und 136 schwingt.

Zwar verursacht das Anlegen einer Wechselspannung zwischen den Elektroden 134 und 136 zunächst Dickenänderungen des Piezokristalls 132 senkrecht zu diesen Elektroden, doch sind diese Dickenänderungen von Kontraktionen in radialer Richtung begleitet, die sich zu Radialschwingungen aufschaukeln, wenn die Bedingung der Radialresonanz erfüllt ist.

Die Radialresonanzfrequenz ist durch die Abmessungen des Piezokristalls 132 bestimmt und deshalb durch die Wahl dieser Abmessungen einstellbar. Um nach der Theorie eine mittlere Strömungsgeschwindigkeit zu messen, die vom Strömungsprofil unabhängig ist, müssen sich im Meßrohr 10 ebene Wellen ausbreiten. Damit sich in einem Rohr ebene Wellen bilden können, müssen zwei Bedingungen erfüllt sein:

1. die Wellenlänge im Medium muß deutlich größer als der Innendurchmesser des Meßrohres sein, vorzugsweise größer als das 1,6-fache dieses Innendurchmessers;

2. die Schallkennimpedanz (Schallhärte) des Meßrohres muß wesentlich größer als diejenige des Mediums sein.

Die erste Bedingung wird dadurch erfüllt, daß die Radialresonanzfrequenz des Piezokristalls 132 durch entsprechende Wahl seiner Abmessungen auf einen Wert eingestellt wird, bei dem die Wellenlänge der Ultraschallwellen im Medium größer als der Innendurchmesser des Meßrohres ist. Bei einem Innendurchmesser des Meßrohres von 8 mm ist diese Bedingung beispielsweise erfüllt, wenn die Radialresonanzfrequenz des Piezokristalls 132 und somit die Frequenz $f_M$ der Sendewechselspannung $U_S$ etwa 62 kHz beträgt.

Die zweite Bedingung wird durch geeignete Wahl des Materials des Meßrohres 10 erfüllt. Beispielsweise weist ein Meßrohr aus rostfreiem Stahl eine Schallkennimpedanz auf, die groß gegen die Schallkennimpedanz jedes vorkommenden Strömungsmediums ist.

Die beiden Ultraschallwandler der Durchflußmeßanordnung haben den gleichen Aufbau und demzufolge auch die gleiche Radialresonanzfrequenz. Wenn die von einem Ultraschallwandler erzeugte Ultraschallwelle am anderen Ultraschallwandler eintrifft, wird dessen Piezokristall 132 durch die Druckschwankungen zu Radialschwingungen bei der Radialresonanzfrequenz angeregt. Diese Radialschwingungen sind von Kontraktionen in der Longitudinalrichtung begleitet, durch die eine Wechselspannung gleicher Frequenz zwischen den Elektroden 134 und 136 erzeugt wird, die die Empfangswechselspannung $U_E$ darstellt. Jeder nach Art von Fig. 13 ausgebildete Ultraschallwandler kann somit wahlweise als Sendewandler oder als Empfangswandler arbeiten.

Da die Ultraschallwandler in Resonanz betrieben werden, erhält man eine sehr gute Leistungsübertragung vom Sendewandler zum Empfangswandler. Dies ist von großem Vorteil, da man dadurch mit verhältnismäßig geringer Sendeleistung eine ausreichend große Empfangswechselspannung von beispielsweise 100 mV erhalten kann. Ein weiterer Vorteil des Resonanzbetriebs der verhältnismäßig schmalbandigen Wandler besteht darin, daß Störgeräusche im Medium, die beispielsweise von Pumpen, Ventilen oder dergleichen verursacht werden, unmittelbar beim Meßaufnehmer ausgefiltert werden.

Da die vom Sendewandler erzeugten Ultraschallwellen sich im strömenden Medium in entgegengesetzten Richtungen ausbreiten, ist es erforderlich, die sich vom Meßrohr wegbewegenden Ultraschallwellen zu dämpfen, damit keine Meßfehler durch Schallreflexionen im das Meßrohr enthaltenden Leitungssystem verursacht werden. Zu diesem Zweck ist auf der dem Meßrohr 10 entgegengesetzten Seite des Ultraschallwandlers 130 ein Dämpfungsrohr 160 angeordnet. Das Dämpfungsrohr 160 besteht aus einem Stahlrohr 162, das innen mit einem nichtporösen Dämpfungsmaterial 164 ausgekleidet ist. An dem Stahlrohr 162 ist ein Flansch 166 angeformt, der unter Einfügung einer Dichtung 168 mittels Schrauben 169 an der Gegenplatte 146 befestigt ist.

Als besonders gut geeignetes Dämpfungsmaterial hat sich Teflon erwiesen. Natürlich ist der Innendurchmesser des Stahlrohres 162 entsprechend der Dicke des Dämpfungsmaterials 164 so bemessen, daß der freie Innendurchmesser des Dämpfungsrohres 160 gleich dem Innendurchmesser des Meßrohres 10 ist.

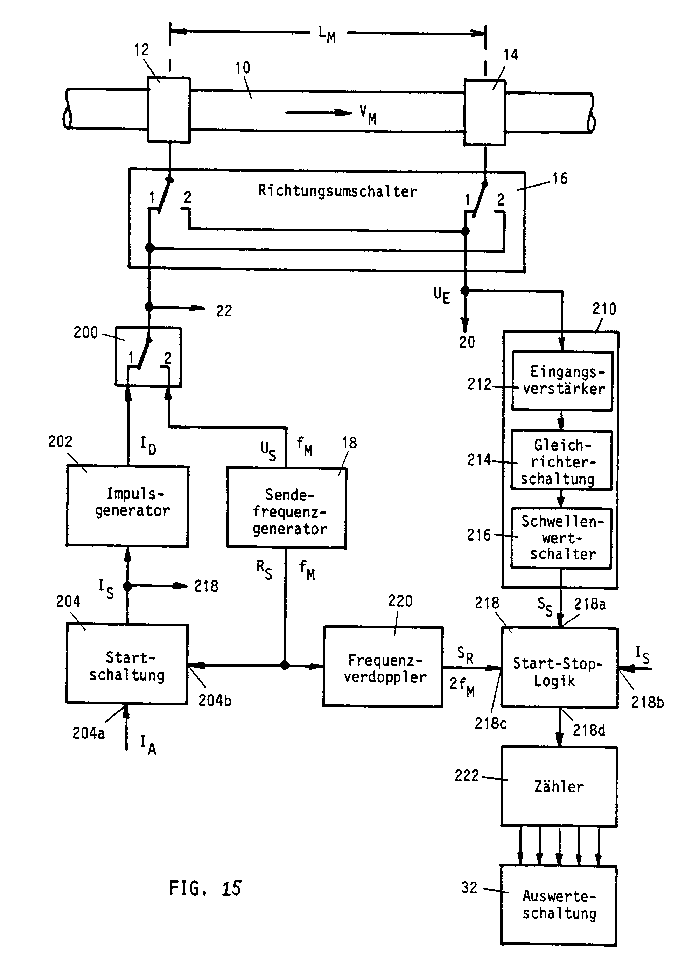

Da der Durchflußmesser an jedem Ende des Meßrohres 10 einen Ultraschallwandler der in Fig. 13 dargestellten Art aufweist, ist auf jeder Seite des Meßrohres ein Dämpfungsrohr angeordnet, so daß der in Fig. 14 dargestellte Gesamtaufbau erhalten wird. Fig. 14 zeigt das Meßrohr 10 mit den an seinen beiden Enden angeformten Flanschen 142 und den Gegenplatten 146, die die Kammern umschließen, in denen die piezoelektrischen Wandler angeordnet sind. An den Flanschen 142 sind auch die Durchführungen 170 für die zu den Elektroden der Piezokristalle führenden elektrischen Leitungen dargestellt. Auf jeder Seite des Meßrohres 10 ist ein Dämpfungsrohr 160 angeordnet, das mittels seines Flansches 166 an der zugeordneten Gegenplatte 146 befestigt ist. Jedes Dämpfungsrohr 160 hat am anderen Ende einen Flansch 172 zur Verbindung mit dem Leitungssystem.

Um nach der Gleichung (9) die Strömungsgeschwindigkeit $V_M$ berechnen zu können, benötigt man außer den Restphasenwinkeln noch die Anzahl $m_1$ bzw. $m_2$ der ganzen Wellenlängen auf der Strecke $L_M$ zwischen den beiden Ultraschallwandlern. Wie im Zusammenhang mit Gleichung (9) erläutert wurde, kann davon ausgegangen werden, daß die Anzahl der ganzen Wellenlängen in beiden Meßrichtungen gleich ist, so daß gilt:

$$m_1 = m_2 = m \qquad (29)$$

Es genügt daher, wenn die Anzahl der ganzen Wellenlängen in einer Meßrichtung bestimmt wird. Da sich je nach der Schallgeschwindigkeit im Medium eine andere Anzahl m ergibt, muß die Anzahl m gemessen werden. Dabei ist die erforderliche Genauigkeit relativ gering. Fehler, die bei einem Übergang von m auf m + 1 oder m - 1 entstehen könnten, können durch eine Plausibilitätsprüfung leicht festgestellt und korrigiert werden.

Fig. 15 zeigt ein Blockschaltbild einer Anordnung, die zu der Durchflußmeßanordnung von Fig. 1 hinzugefügt wird, um die Anzahl m der ganzen Wellenlängen nach einem Laufzeitmeßverfahren zu ermitteln. Diese Anordnung eignet sich besonders gut für den Fall, daß die Ultraschallwandler durch ringförmige piezoelektrische Wandler der in Fig. 13 dargestellten Art gebildet sind. Von der Durchflußmeßanordnung von Fig. 1 ist in Fig. 15 zur Vereinfachung außer dem Meßrohr 10 mit den beiden Ultraschallwandlern 12 und 14 sowie dem Richtungsumschalter 16 nur der Sendefrequenzgenerator 18 dargestellt. Die übrigen Bestandteile der Durchflußmeßanordnung von Fig. 1 werden nur für die Phasenmessung, nicht jedoch für die Bestimmung der Anzahl m der ganzen Wellenlängen benötigt.

In Fig. 15 ist zwischen den Sendefrequenzgenerator 18 und den sendeseitigen Eingang des Richtungsumschalters 16 ein Umschalter 200 eingefügt, der in der dargestellten Stellung 1 den Richtungsumschalter 16 vom Ausgang des Sendefrequenzgenerators 18 abtrennt und mit dem Ausgang eines Impulsgenerators 202 verbindet. Für die Phasenmessung wird der Umschalter 200 in die andere Stellung 2 gebracht, in welcher er den Richtungsumschalter 16 vom Ausgang des Impulsgenerators 202 abtrennt und mit dem Ausgang des Sendefrequenzgenerators 18 verbindet, so daß die Durchflußmeßanordnung der Darstellung von Fig. 1 entspricht.

Der Impulsgenerator 202 hat einen Auslöseeingang, der mit dem Ausgang einer Startschaltung 204 verbunden ist. Die Startschaltung 204 hat ihrerseits einen Auslöseeingang 204a sowie einen Synchronisiereingang 204b, der mit einem Ausgang des Sendefrequenzgenerators 18 verbunden ist, an dem ein Rechtecksignal $R_S$ abgegeben wird, das die gleiche Frequenz $f_M$ und die gleiche Phasenlage wie die Sendewechselspannung $U_S$ hat. Wenn der Sendefrequenzgenerator der Ausführungsform von Fig. 9 und 10 entspricht, steht ein solches Rechtecksignal beispielsweise am Ausgang des Frequenzteilers 34 bzw. 86 zur Verfügung. Im übrigen gibt es bei allen Ausführungsbeispielen ein entsprechendes Rechtecksignal in Form des Signals $Q_S$ am Ausgang der Sendesignal-Aufbereitungsschaltung 22.

Wenn dem Auslöseeingang 204a der Startschaltung 204 ein Auslöseimpuls $I_A$ zugeführt wird, schickt die Startschaltung 204 zum Impulsgenerator 202 einen Startimpuls $I_S$, der eine genau definierte zeitliche Lage relativ zu der vom Sendefrequenzgenerator 18 gelieferten Rechteckspannung $R_S$ und damit auch zu der Sendewechselspannung $U_S$ hat. Bei jedem Empfang eines Startimpulses erzeugt der Impulsgenerator 202 einen kurzen Einzelimpuls $I_D$. Wenn der Umschalter 200 in der Stellung 1 steht, wird dieser Einzelimpuls $I_D$ dem Ultraschallwandler 12 oder 14 zugeführt, der durch die Einstellung des Richtungsumschalters 16 als Sendewandler ausgewählt ist.

An den empfangsseitigen Ausgang des Richtungsumschalters 16 ist parallel zu der (in Fig. 15 nicht dargestellten) Empfangssignal-Aufbereitungsschaltung 20 (Fig. 1) eine Impuls-Empfangsschaltung 210 angeschlossen, die hintereinander einen Eingangsverstärker 212, eine Gleichrichterschaltung 214 und einen Schwellenwertschalter 216 enthält. Der Ausgang des Schwellenwertschalters 216 ist mit einem Stopeingang 218a einer Start-Stop-Logik 218 verbunden, die an einem Starteingang 218b den von der Startschaltung 204 erzeugten Startimpuls $I_S$ empfängt. Die Start-Stop-Logik 218 hat ferner einen Signaleingang 218c, der mit dem Ausgang eines Frequenzverdopplers 220 verbunden ist, der an seinem Eingang das vom Sendefrequenzgenerator 18 gelieferte Rechtecksignal $R_S$ mit der Frequenz $f_M$ empfängt. Der Frequenzverdoppler liefert ein Rechtecksignal $S_R$ mit der doppelten Frequenz $2 \cdot f_M$ zum Signaleingang 218c der Start-Stop-Logik 218.

Die Start-Stop-Logik 218 hat einen Signalausgang 218d, der mit dem Zähleingang eines Zählers 222 verbunden ist. Sie ist so ausgeführt, daß sie durch ein ihrem Starteingang 218b zugeführtes Startsignal geöffnet wird, so daß sie das ihrem Signaleingang 218c zugeführte Rechtecksignal $S_R$ zu ihrem Signalausgang 218d und damit zum Zähler 222 durchläßt, und daß sie durch ein vom Ausgang des Schwellenwertschalters 216 an den Stopeingang 218a angelegtes Stopsignal $S_S$ gesperrt wird, so daß die weitere Übertragung des Rechtecksignals $S_R$ zum Zähler 222 verhindert wird.

Die Stufenausgänge des Zählers 222 sind mit entsprechenden Eingängen der Auswerteschaltung 32 verbunden. Der Zähler 222 zählt jeweils die zwischen einem Startsignal und einem Stopsignal auftretenden Rechteckimpulse des Rechtecksignals $S_R$, und er liefert den die gezählte Impulszahl anzeigenden Zählerstand zur Auswerteschaltung 32.

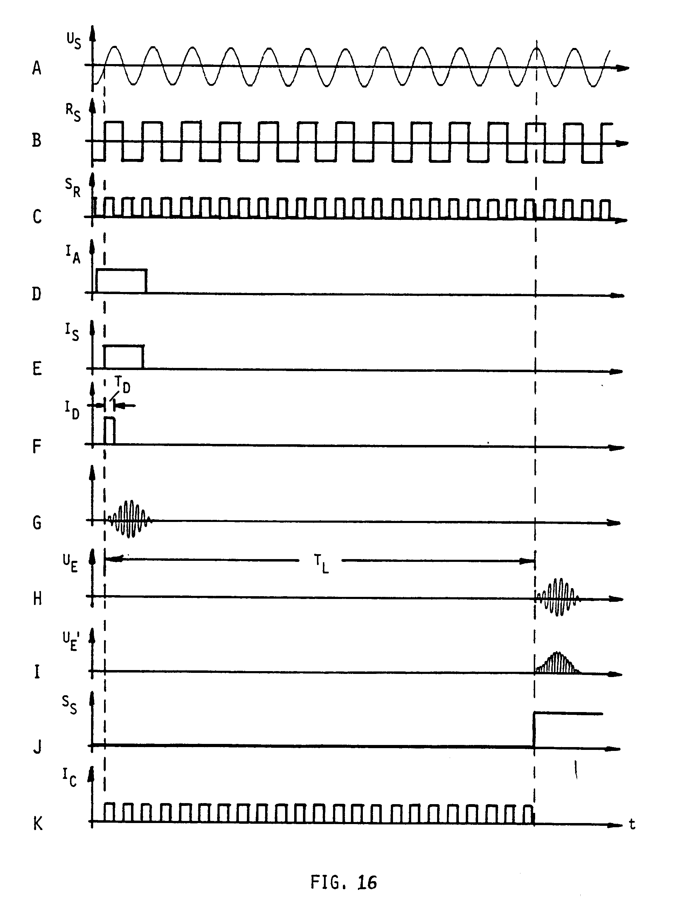

Die Funktionsweise der Anordnung von Fig. 15 wird anhand der Diagramme von Fig. 16 erläutert.

In Fig. 16 zeigt das Diagramm A die vom Sendegenerator 18 gelieferte Sendewechselspannung $U_S$ und das Diagramm B die entsprechende Rechteckspannung $R_S$ mit der Frequenz $f_M$. Das Diagramm C zeigt die vom Frequenzverdoppler 220 gelieferte Rechteckspannung $S_R$ mit der doppelten Frequenz $2 \cdot f_M$. Im Diagramm D ist der Auslöseimpuls $I_A$ gezeigt, der dem Auslöseeingang 204a der Startschaltung 204 zugeführt wird und eine beliebige zeitliche Lage relativ zu dem Rechtecksignal $R_S$ haben kann. Das Diagramm E zeigt den von der Startschaltung 204 erzeugten Startimpuls $I_S$, der genau phasengleich mit einer ansteigenden Flanke des Rechtecksignals $R_S$ beginnt und sowohl dem Auslöseeingang des Impulsgenerators 202 als auch dem Starteingang 218b der Start-Stop-Schaltung 218 zugeführt wird. Aufgrund der Auslösung durch den Startimpuls $I_S$ erzeugt der Impulsgenerator 202 den im Diagramm F dargestellten Einzelimpuls $I_D$ der Dauer $T_D$ (zur Verdeutlichung nicht maßstäblich gezeichnet).

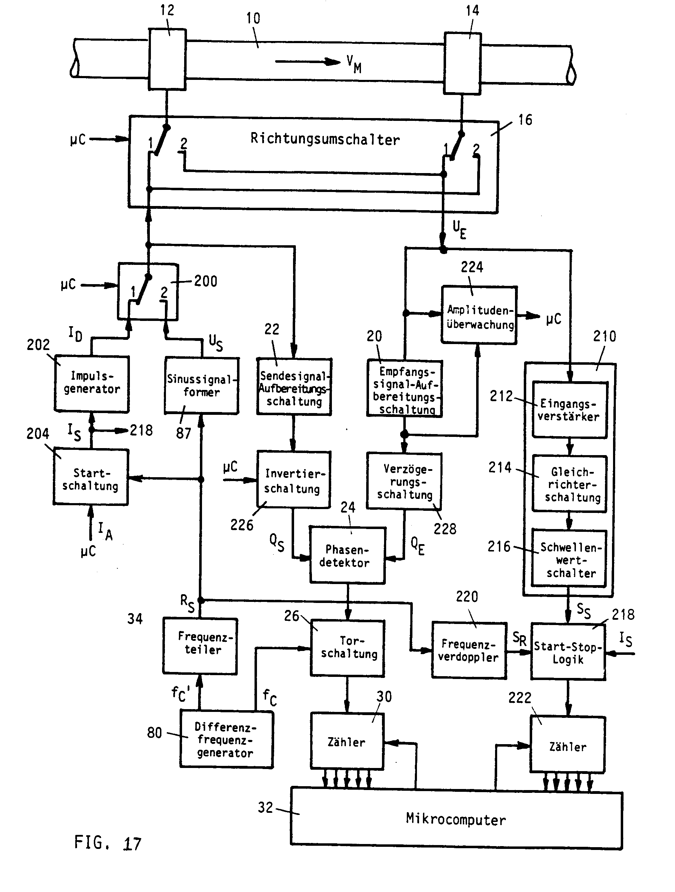

Wenn der Umschalter 200 die in Fig. 15 dargestellte Stellung 1 einnimmt und auch der Richtungsumschalter 16 in die in Fig. 17 dargestellte Stellung 1 eingestellt ist, wird der Einzelimpuls $I_D$ dem Ultraschallwandler 12 zugeführt. Da ein Einzelimpuls unterhalb einer Grenzfrequenz, die in umgekehrtem Verhältnis zu seiner Impulsdauer steht, ein kontinuierliches Frequenzspektrum aufweist, wird der Ultraschallwandler 12 durch den angelegten Einzelimpuls $I_D$ zu Eigenresonanzschwingungen bei Eigenresonanzfrequenzen angeregt, die im Frequenzspektrum des Einzelimpulses $I_D$ enthalten sind. Daher erzeugt der Ultraschallwandler 12 einen kurzen Ultraschallwellenzug der im Diagramm G dargestellten Art. Dieser Ultraschallwellenzug läuft durch das im Meßrohr 10 fließende Medium zum Empfangswandler 14, an welchem er nach einer Laufzeit $T_L$ eintrifft. Durch den eintreffenden Wellenzug wird der Empfangswandler 14 ebenfalls zu Eigenresonanzschwingungen angeregt, so daß er eine Empfangswechselspannung $U_E$ in Form des im Diagramm H dargestellten Schwingungszugs abgibt, die der Impuls-Empfangsschaltung 210 zugeführt wird.

In der Impuls-Empfangsschaltung 210 wird die Empfangswechselspannung $U_E$ zunächst im Eingangsverstärker 212 verstärkt, vorzugsweise mit Tiefpaßfilterung, und dann durch die Gleichrichterschaltung 214 einer Vollweggleichrichtung unterworfen, wodurch der im Diagramm I dargestellte Schwingungszug $U_E'$ erhalten wird, der an den Eingang des Schwellenwertschalters 216 angelegt wird. Das Ausgangssignal des Schwellenwertschalters 216 geht von einem niedrigen Signalwert auf einen hohen Signalwert, wenn die Amplitude seines Eingangssignals zum ersten Mal einen vorbestimmten Schwellenwert überschreitet, der sehr niedrig eingestellt ist. Dadurch wird das im Diagramm J dargestellte Stopsignal $S_S$ erhalten, das an den Stopeingang 218a der Start-Stop-Schaltung 218 angelegt wird.

Das Diagramm K von Fig. 16 zeigt die Impulsfolge, die vom Ausgang 218d der Start-Stop-Logik 218 zum Zähleingang des Zählers 222 übertragen wird. Diese Impulsfolge beginnt phasengleich mit der ansteigenden Flanke des Startimpulses $I_S$ und auch phasengleich mit einer ansteigenden Flanke des Rechtecksignals $S_R$ sowie mit einem Nulldurchgang der Sendewechselspannung $U_S$. Der Zähler 222 zählt nun die Anzahl k der Impulse, die bis zum Aufwärtssprung des Stopsignals $S_S$,also während der Laufzeit $T_L$, übertragen werden. Wegen der Frequenzverdopplung ist diese Zahl k doppelt so groß wie die Anzahl m der im gleichen Zeitraum vom Sendefrequenzgenerator 18 erzeugten Perioden des Rechtecksignals $R_S$ und somit auch der Sendewechselspannung $U_S$. Wenn anstelle des Einzelimpulses $I_D$ die Sendewechselspannung $U_S$ an den Sendewandler 12 angelegt worden wäre, wären m Perioden der Sendewechselspannung $U_S$ während der Laufzeit $T_L$ vom Sendewandler zum Empfangswandler gelaufen, so daß m ganze Wellenlängen der Ultraschallwelle im Meßrohr zwischen den beiden Wandlern vorhanden gewesen wären. Dies ist aus dem Diagramm A von Fig. 16 unmittelbar ersichtlich, wo m Perioden der Sendewechselspannung $U_S$ im Zeitintervall $T_L$ vorhanden sind. Der beim Stillsetzen des Zählvorgangs erreichte Zählerstand k entspricht also der doppelten Anzahl der ganzen Wellenlängen bzw. der Anzahl der halben Wellenlängen im Meßrohr, und die gesuchte Anzahl m der ganzen Wellenlängen ergibt sich unmittelbar aus dem Zählerstand k nach der folgenden Gleichung

$$m = \text{int}(k/2) \quad (30)$$

Die Bestimmung der Anzahl k der halben Wellenlängen durch Zählung mit der doppelten Frequenz $2 \cdot f_M$ ergibt den Vorteil, daß man anhand der außerdem durchgeführten Phasenmessung die Bestimmung der Anzahl m der ganzen Wellenlängen überprüfen kann. Dadurch kann ein Fehler von einer halben Wellenlänge bei der Bestimmung der Anzahl m der ganzen Wellenlängen erkannt und korrigiert werden. Somit sind die Übergänge von m auf m + 1 oder m - 1 ganzen Wellenlängen unproblematisch.

Für die richtige Bestimmung der Anzahl m der ganzen Wellenlängen ist es erforderlich, daß das Eintreffen des Schallwellenzugs am Empfangswandler möglichst schnell und exakt reproduzierbar erkannt wird. Diesem Zweck dient die Vollweggleichrichtung in der Gleichrichterschaltung 214. Das durch die Vollweggleichrichtung erhaltene Signal $U_E'$ des Diagramms I hat gegenüber dem ursprünglichen Empfangssignal $U_E$ des Diagramms H eine Grundschwingung der doppelten Frequenz, so daß das Überschreiten der Ansprechschwelle des Schwellenwertschalters 216 entsprechend früher erkannt werden kann.

Wenn die verwendeten Ultraschallwandler von dem in Fig. 13 dargestellten Typ mit ringförmigen piezoelektrischen Wandlern sind, besteht eine weitere vorteilhafte Möglichkeit zur Vermeidung von Fehlern bei der Bestimmung der Anzahl m der ganzen Wellenlängen im Meßrohr. Wie zuvor erläutert wurde, werden die ringförmigen piezoelektrischen Wandler für die Phasenmessung vorzugsweise mit der Radialresonanzfrequenz betrieben. Für die Bestimmung der Anzahl m der ganzen Wellenlängen im Meßrohr hat es sich demgegenüber als vorteilhaft herausgestellt, den Sendewandler durch den Einzelimpuls so anzuregen, daß er außer bei der Radialresonanzfrequenz auch bei der Longitudinalresonanzfrequenz schwingt, die etwa dreimal höher als die Radialresonanzfrequenz ist. Dies kann durch geeignete Bemessung der Dauer $T_D$ des Einzelimpulses erreicht werden, indem der Einzelimpuls so kurz gemacht wird, daß die Grenzfrequenz seines Frequenzspektrums über der Longitudinalresonanzfrequenz liegt. Wenn der ringförmige piezoelektrische Wandler durch einen so kurzen Einzelimpuls angeregt wird, überwiegt beim Schwingungseinsatz zunächst die Longitudinalresonanz und erst später die Radialresonanz. Durch die höhere Longitudinalresonanzfrequenz am Anfang des Wellenzugs wird die Impulsübertragung steilflankiger, so daß die Gefahr von Meßfehlern noch weiter verringert wird.

In Fig. 17 ist das Gesamtblockschaltbild einer Durchflußmeßanordnung dargestellt, die sowohl den Schaltungsteil für die genaue Phasenmessung als auch den Schaltungsteil für die Bestimmung der Anzahl m der ganzen Wellenlängen im Meßrohr enthält. Der Schaltungsteil für die genaue Phasenmessung entspricht dem Ausführungsbeispiel von Fig. 9 mit einem Differenzfrequenzgenerator 80. Der Schaltungsteil für die Bestimmung der Anzahl m der ganzen Wellenlängen im Meßrohr entspricht dem Ausführungsbeispiel von Fig. 15. Die Schaltungsblöcke in Fig. 17, die denjenigen von Fig. 9 bzw. von Fig. 15 entsprechen, sind mit den gleichen Bezugszeichen wie dort bezeichnet und werden nicht nochmals beschrieben. Zur besseren Übersichtlichkeit des Blockschaltbilds sind einige Verbindungen nicht durchgehend gezeichnet, sondern durch Pfeile mit der Angabe des Ziels bzw. der Herkunft der betreffenden Signale ersetzt.

Ferner ist in Fig. 17 der Fall angenommen, daß die Auswerteschaltung 32 durch einen Mikrocomputer ($\mu$C) gebildet ist, der auch die für den Ablauf des Meßverfahrens erforderlichen Steuersignale liefert. Der Übersichtlichkeit wegen sind die Verbindungen für die Übertragung von Signalen von und zum Mikrocomputer ebenfalls nicht dargestellt, sondern durch Pfeile mit der Angabe "$\mu$C" ersetzt.

Bei der Durchflußmeßanordnung von Fig. 17 sind noch zwei zusätzliche Maßnahmen getroffen, die bisher noch nicht erwähnt worden sind.

Die erste Maßnahme besteht darin, daß im Empfangsteil der Schaltung eine Amplitudenüberwachungsschaltung 224 vorgesehen ist, der die vom Richtungsumschalter 16 kommende Empfangswechselspannung $U_E$ zugeführt wird. Ein weiterer Eingang der Amplitudenüberwachungsschaltung 224 empfängt die Rechteckspannung $Q_E$ vom Ausgang der Empfangssignal-Aufbereitungsschaltung 20. Die Amplitudenüberwachungsschaltung 224 prüft, ob die Amplitude der Empfangswechselspannung $U_E$ ausreichend groß ist, um eine richtige Auswertung zu erlauben. Die Zuführung der Rechteckspannung $Q_E$ dient der Steuerung der Amplitudenüberwachung. Wenn die Amplitude der Empfangswechselspannung $U_E$ unter einen vorgegebenen Wert fällt, liefert die Amplitudenüberwachungsschaltung 224 ein Signal zum Mikrocomputer 32, der daraufhin eine Warnmeldung ausgibt.

Die zweite Maßnahme besteht darin, daß zwischen die Sendesignal-Aufbereitungsschaltung 22 und den Phasendetektor 24 eine Invertierschaltung 226 eingefügt ist, die durch ein vom Mikrocomputer 32 geliefertes Signal so steuerbar ist, daß sie die Rechteckspannung $Q_S$ entweder unverändert durchläßt oder invertiert. Die Invertierschaltung 226 ermöglicht die Messung von sehr kleinen Restphasenwinkeln, die in der Nähe von 0° liegen. Bei so kleinen Restphasenwinkeln wird die Dauer $T_I$ der Meßimpulse $I_M$ so klein, daß sie mit den zuvor beschriebenen Maßnahmen nicht mehr richtig ermittelt werden kann. Wenn der Mikrocomputer 32 diesen Zustand erkennt, veranlaßt er die Invertierung der Rechteckspannung $Q_S$. Dies entspricht einer Phasendrehung um 180°, wodurch der Restphasenwinkel um 180° und dementsprechend die Dauer $T_I$ der Meßimpulse um $1/(2 \cdot f_M)$ vergrößert wird.

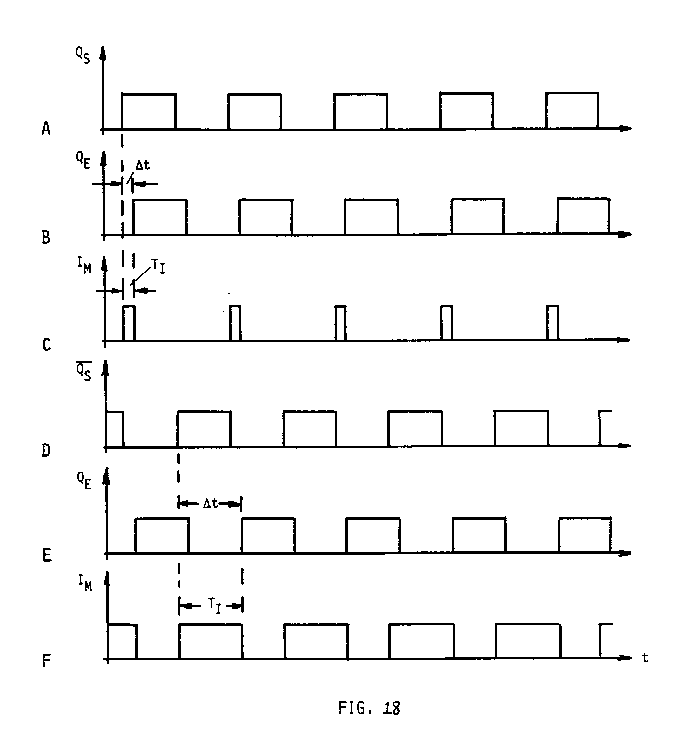

Diese Wirkung wird aus den Diagrammen von Fig. 18 verständlich. Die Diagramme A, B und C von Fig. 20 zeigen die Rechteckspannung $Q_S$ und $Q_E$ sowie die Meßimpulse $I_M$ entsprechend der Darstellung in den Diagrammen B, C, D von Fig. 2 und 3, jedoch für einen sehr kleinen Restphasenwinkel, so daß der Zeitabstand $\Delta t$ und dementsprechend die Dauer $T_I$ der Meßimpulse $I_M$ sehr klein ist. Die Diagramme D, E und F von Fig. 20 zeigen die gleichen Signale für den Fall, daß die Rechteckspannung $Q_S$ invertiert ist. Es ist zu erkennen, daß in diesem Fall die Meßimpulse $I_M$ eine erheblich größere Dauer $T_I$ haben, die ein problemloses Ausmessen ermöglicht.

Zwischen die Empfangssignal-Aufbereitungsschaltung 20 und den Phasendetektor 24 ist eine Verzögerungsschaltung 228 eingefügt, die die von der Invertierschaltung 226 verursachte Verzögerung kompensiert, so daß die Signale $Q_S$ und $Q_E$ an den Eingängen des Phasendetektors 24 die gleiche relative Phasenlage wie an den Ausgängen der Aufbereitungsschaltungen 20 und 22 haben. Natürlich könnte die Lage der Schaltungen 226 und 228 auch vertauscht werden, so daß anstelle des Signals $Q_S$ das Signal $Q_E$ invertiert wird.

Anhand des Gesamtblockschaltbilds läßt sich der vollständige Ablauf eines Meßvorgangs unter der Steuerung durch den Mikrocomputer 32 erläutern. Ein vollständiger Meßvorgang läuft in den folgenden Phasen ab:

### 1. Bestimmung der Anzahl ganzer Wellenlängen

a) Der Mikrocomputer 32 bringt den Richtungsumschalter 16 und den Umschalter 200 in die jeweilige Stellung 1 und schickt einen Auslöseimpuls $I_A$ zur Startschaltung 204.

b) Synchron mit einer ansteigenden Flanke der Rechteckspannung $R_S$ schickt die Startschaltung 204 einen Startimpuls $I_S$ zum Impulsgenerator 202, so daß dieser einen Einzelimpuls $I_D$ abgibt, der über die Schalter 200 und 16 an den Ultraschallwandler 12 angelegt wird. Gleichzeitig öffnet der Startimpuls $I_S$ die Start-Stop-Logik 218, so daß der Zähler 222 die Zählung der Impulse des Rechtecksignals $S_R$ beginnt.

c) Wenn die Amplitude des verstärkten und gleichgerichteten Empfangssignals $U_E'$ die Ansprechschwelle des Schwellenwertschalters 216 erreicht, wird die Start-Stop-Logik 218 durch das Stopsignal $S_S$ gesperrt, so daß die Impulszählung im Zähler 222 beendet wird. Der erreichte Zählerstand wird zum Mikrocomputer 32 übertragen, der daraus die Anzahl m der ganzen Wellenlängen im Meßrohr berechnet. Anschließend wird der Zähler 222 auf Null zurückgestellt.

### 2. Messung des Restphasenwinkels in der Strömungsrichtung

a) Der Mikrocomputer 32 bringt den Umschalter 200 in die Stellung 2, Laßt jedoch den Richtungsumschalter 16 in der Stellung 1, so daß die Sendewechselspannung $U_S$ an den Ultraschallwandler 12 angelegt wird.

b) Nach Ablauf einer Wartezeit, nach der der Sendewandler 12 eingeschwungen ist, erfolgt die erste Restphasenmessung durch Impulszählung während eines Meßzeitintervalls der Dauer $T_I$ im Zähler 30, worauf der erreichte Zählerstand zum Mikrocomputer 32 übertragen und der Zähler 30 auf Null zurückgestellt wird.

c) Der Mikrocomputer 32 prüft, ob die Dauer $T_I$ der Meßimpulse $I_M$ für eine einwandfreie Rechnung ausreicht oder ob eine Invertierung erforderlich ist. Im Bedarfsfall wird die Invertierschaltung 226 umgesteuert.

d) Die Messung der Impulsdauer $T_I$ der Meßimpulse $I_M$ durch Impulszählung im Zähler 30 wird in n aufeinanderfolgenden Meßzeitintervallen wiederholt, in denen eine Phasendrehung der Startphase $\phi_S$ um $2\pi$ erfolgt. Nach jedem Meßzeitintervall wird der Zählerstand des Zählers 30 zum Mikrocomputer 32 übertragen und der Zähler 30 auf Null zurückgestellt.

e) Nach Ablauf der n Meßzeitintervalle bestimmt der Mikrocomputer 32 aus den erhaltenen n Zählerständen den mittleren Restphasenwinkel $\phi_{R1}$ durch Mittelwertbildung.

### 3. Messung des Restphasenwinkels gegen die Strömungsrichtung

a) Der Mikrocomputer 32 bringt den Richtungsumschalter 200 in die Stellung 2 und läßt den Umschalter 200 in der Stellung 2, so daß die Sendewechselspannung $U_S$ an den Ultraschallwandler 14 angelegt wird.

b) Nach Ablauf einer Wartezeit, nach der der Sendewandler 14 eingeschwungen ist, wird die Messung der Impulsdauer $T_I$ der Meßimpulse $I_M$ durch Impulszählung im Zähler 30 in n aufeinanderfolgenden Meßzeitintervallen wiederholt, in denen eine Phasendrehung der Startphase $\phi_S$ um $2\pi$ erfolgt. Nach jedem Meßzeitintervall wird der Zählerstand des Zählers 30 zum Mikrocomputer 32 übertragen und der Zähler 30 auf Null zurückgestellt.

c) Nach Ablauf der n Meßzeitintervalle bestimmt der Mikrocomputer 32 aus den erhaltenen n Zählerständen den mittleren Restphasenwinkel $\phi_{R2}$ durch Mittelwertbildung.

## 4. Berechnung der Strömungsgeschwindigkeit

Der Mikrocomputer 32 berechnet aus den in den vorangehenden Schritten erhaltenen Meßwerten m, $\phi_{R1}$ und $\phi_{R2}$ sowie den vorgegebenen Werten für $f_M$ und $L_M$ die Strömungsgeschwindigkeit $V_M$ nach der Gleichung (9) und daraus den Volumendurchfluß durch Multiplikation mit dem Strömungsquerschnitt. Die Ergebnisse werden in geeigneter Weise optisch angezeigt und/oder in geeignete Signale für eine Datenübertragung umgesetzt, beispielsweise in ein frequenzproportionales Signal.

Damit ist ein vollständiger Meßvorgang beendet. Es ist zu bemerken, daß die Bestimmung der Anzahl m ganzer Wellenlängen nicht notwendigerweise am Beginn jedes Meßvorgangs erfolgen muß, da sich diese Anzahl, wenn überhaupt, nur langsam ändert. Zudem ist eine allmähliche Änderung der Anzahl m ganzer Wellenlängen auch aus der fortschreitenden Änderung der gemessenen Restphasenwinkel erkennbar. Es würde daher genügen, die Messung der Anzahl m ganzer Wellenlängen in größeren Zeitabständen zu wiederholen, beispielsweise alle 10 Sekunden.

## Patentansprüche

1. Verfahren zur Durchflußmessung mittels Ultraschallwellen, die sich in einem durch ein Meßrohr (10) strömenden Medium zwischen zwei in einem definierten Abstand voneinander angeordneten Ultraschallwandlern (12, 14) ausbreiten, von denen der eine als Sendewandler arbeitet, der ein elektrisches Sendesignal ($U_S$) in eine Ultraschallwelle gleicher Frequenz ($f_M$) umwandelt, während der andere als Empfangswandler arbeitet, der die ankommende Ultraschallwelle in ein elektrisches Empfangssignal ($U_E$) gleicher Frequenz umwandelt, wobei zur Bestimmung des Durchflusses die Phasenverschiebung zwischen dem Sendesignal ($U_S$) und dem Empfangssignal ($U_E$) derart gemessen wird, daß in Meßzeitintervallen, deren Dauer ($T_I$) der Phasenverschiebung entspricht, jeweils die Perioden eines Signals ($I_C$) einer Zählfrequenz ($f_C$) gezählt werden, die wesentlich größer als die der Frequenz des Sendesignals ($U_S$) entsprechende Meßfrequenz ($f_M$) ist, daß der Phasenwinkel der Startphase ($\phi_S$), den das Zählfrequenzsignal ($f_C$) beim Beginn jedes Zählvorgangs gegenüber dem Meßzeitintervall ($T_I$) aufweist, in einem mehrere aufeinanderfolgende Meßzeitintervalle ($T_I$) umfassenden Meßzyklus ($T_R$) von Meßzeitintervall zu Meßzeitintervall vergrößert wird und daß die im Verlauf des Meßzyklus ($T_R$) erhaltenen Zählwerte zur Bildung eines Meßwerts mit erhöhter Meßauflösung ausgewertet werden.

2. Verfahren nach Anspruch 1, bei dem die Startphase ($\phi_S$) des Zählfrequenzsignals ($I_C$) im Verlauf des Meßzyklus ($T_R$) um $2\pi$ geändert wird.

3. Verfahren nach Anspruch 1 oder 2, bei dem die Meßfrequenz ($f_M$) durch Frequenzteilung aus der Zählfrequenz ($f_C$) abgeleitet wird und in jedem Meßzyklus ($T_I$) der Meßfrequenz ($f_M$) gegenüber der Zählfrequenz ($f_C$) eine sich von Periode zu Periode der Meßfrequenz ($f_M$) größere Phasenverschiebung ($\phi_M$)erteilt wird.

4. Verfahren nach Anspruch 3, bei dem die der Meßfrequenz ($f_M$) erteilte Phasenverschiebung ($\phi_M$) im Verlauf des Meßzyklus ($T_R$) stetig größer wird.

5. Verfahren nach Anspruch 4, bei dem die der Meßfrequenz ($f_M$) erteilte Phasenverschiebung ($\phi_M$) in jeder Periode der Meßfrequenz in Abhängigkeit von vorhergehenden Meßergebnissen zum Zweck einer sukzessiven Approximation geändert wird.

6. Verfahren nach Anspruch 1 oder 2, bei dem die Meßfrequenz ($f_M$) durch Frequenzteilung aus einer Frequenz ($f_{C'}$) abgeleitet wird, die sich von der Zählfrequenz ($f_C$) um eine vorgegebene Differenzfrequenz ($\Delta f$) unterscheidet.

7. Verfahren nach Anspruch 6, bei dem die Differenzfrequenz ($\Delta f$) gleich der Meßfrequenz ($f_M$), geteilt durch die Anzahl (n) der Meßzeitintervalle ($T_I$) pro Meßzyklus ($T_R$), ist.

8. Verfahren nach Anspruch 1, bei dem das Zählfrequenzsignal ($I_C$) jeweils nur während der Dauer ($T_I$) jedes Meßzeitintervalls erzeugt wird, die Phasenlage des Zählfrequenzsignals ($I_C$) am Ende jedes Meßzeitintervalls gespeichert wird und die Erzeugung des Zählfrequenzsignals ($I_C$) am Beginn jedes folgenden Meßzeitintervalls mit der gespeicherten Phasenlage fortgesetzt wird.

9. Verfahren nach Anspruch 8, bei dem das Zählfrequenzsignal ($I_C$) aus einer Dreieckspannung ($U_D$) abgeleitet wird, die jeweils nur während der Dauer ($T_I$) jedes Meßzeitintervalls erzeugt und am Beginn jedes Meßzeitintervalls von dem am Ende des vorhergehenden Meßzeitintervalls erreichten Signalpegel aus fortgesetzt wird.

10. Verfahren nach einem der vorhergehenden Ansprüche, bei dem bei Feststellung einer für die richtige Messung der Phasenverschiebung zu kleinen Dauer ($T_I$) der Meßzeitintervalle einem der beiden gegeneinander phasenverschobenen Signale ($U_S$, $U_E$) eine zusätzliche Phasenverschiebung um 180° erteilt wird.

11. Verfahren nach Anspruch 10, bei dem die Phasenverschiebung zwischen zwei aus dem Sendesignal ($U_S$) und dem Empfangssignal ($U_E$) abgeleiteten Rechtecksignalen ($Q_S$, $Q_E$) gemessen wird und zur Erteilung der zusätzlichen Phasenverschiebung um 180° eines der beiden Rechtecksignale ($Q_S$, $Q_E$) invertiert wird.

12. Verfahren nach einem der vorhergehenden Ansprüche, bei dem zur Ermittlung ganzer Wellenlängen der Ultraschallwelle in dem durch das Meßrohr (10) strömenden Medium zwischen den beiden Ultraschallwandlern (12, 14) der Sendewandler durch einen kurzen Impuls ($I_D$) zur Aussendung eines Schwingungszugs angeregt wird und die Perioden eines Signals ($S_R$) mit der Meßfrequenz ($f_M$) oder einem ganzzahligen Vielfachen ($2 \cdot f_M$) der Meßfrequenz während der Laufzeit ($T_L$) des Schwingungszugs vom Sendewandler zum Empfangswandler gezählt werden.

13. Verfahren nach einem der vorhergehenden Ansprüche, bei dem die Amplitude des Empfangssignals ($U_E$) überwacht wird und bei Feststellung einer für eine einwandfreie Auswertung unzureichenden Amplitude ein Signal zu der Auswerteschaltung (23) geschickt wird.

14. Anordnung mit einem von einem Medium durchströmten Meßrohr (10), zwei an dem Meßrohr (10) in einem definierten Abstand ($L_M$) voneinander angeordneten Ultraschallwandlern (12, 14), Einrichtungen zum Anlegen eines elektrischen Sendesignals ($U_S$) mit der Meßfrequenz ($f_M$) an einen der beiden Ultraschallwandler und zum Empfang des von dem anderen Ultraschallwandler abgegebenen elektrischen Empfangssignals ($U_E$) mit der Meßfrequenz, einem Zählfrequenzgenerator (28), der ein Zählfrequenzsignal ($I_C$) mit einer Zählfrequenz ($f_C$) erzeugt, die wesentlich größer als die Meßfrequenz ($f_M$) ist, einem Zähler (30), der die Perioden des Zählfrequenzsignals ($I_C$) in Meßzeitintervallen ($T_I$) zählt, die der Phasenverschiebung zwischen dem Sendesignal ($U_S$) und dem Empfangssignal ($U_E$) entsprechen, einer Auswerteschaltung (32), zu der der in jedem Meßzeitintervall ($T_I$) erreichte Zählerstand übertragen wird, und Einrichtungen (34, 36, 38; 32, 70; 80, 34; 100, 120; 124, 126), die den Phasenwinkel der Startphase ($\phi_S$), den das Zählfrequenzsignal ($I_C$) beim Beginn jedes Zählvorgangs gegenüber dem Meßzeitintervall ($T_I$) aufweist, in einem mehrere aufeinanderfolgende Meßzeitintervalle ($T_I$) umfassenden Meßzyklus ($T_R$) von Meßzeitintervall zu Meßzeitintervall vergrößern.

15. Anordnung nach Anspruch 14, bei der an den Ausgang des Zählfrequenzgenerators (28) ein Frequenzteiler (34) angeschlossen ist, dessen Teilerfaktor (N) dem Verhältnis zwischen der Zählfrequenz ($f_C$) und der Meßfrequenz ($f_M$) entspricht, dem Frequenzteiler (34) ein steuerbarer Phasenschieber (36) nachgeschaltet ist, der dem Ausgangssignal des Frequenzteilers (34) eine durch ein Phasensteuersignal ($U_R$) bestimmte Phasenverschiebung erteilt, und das Ausgangssignal des steuerbaren Phasenschiebers (36) für das elektrische Sendesignal ($U_S$) verwendet wird.

16. Anordnung nach Anspruch 15, bei der das Phasensteuersignal ($U_R$) ein sich im Verlauf jedes Meßzyklus linear änderndes Rampensignal ist.

17. Anordnung nach Anspruch 15, mit einem Digital-Analog-Umsetzer (70), der digitale Codegruppen in das Phasensteuersignal ($U_R$) umsetzt.

20

**18.** Anordnung nach einem der Ansprüche 15 bis 17, bei der der steuerbare Phasenschieber (36) durch eine PLL-Schaltung gebildet ist.

**19.** Anordnung nach Anspruch 14, bei der der Zählfrequenzgenerator (80) an einem ersten Ausgang (80a) das Zählfrequenzsignal ($I_C$) und an einem zweiten Ausgang ein Signal mit einer Frequenz ($f_C'$) abgibt, die sich von der Zählfrequenz ($f_C$) um eine vorgegebene Differenzfrequenz ($\Delta_f$) unterscheidet, und an den zweiten Ausgang (80b) des Zählfrequenzgenerators (80) ein Frequenzteiler (34) angeschlossen ist, dessen Ausgangssignal ($R_S$) zur Erzeugung des elektrischen Sendesignals ($U_S$) verwendet wird.

**20.** Anordnung nach Anspruch 14, bei der der Zählfrequenzgenerator (124, 126) am Ende jedes Meßzeitintervalls ($T_I$) stillgesetzt und am Beginn des jeweils folgenden Meßzeitintervalls ($T_I$) mit der beim Stillsetzen erreichten Phasenlage des Zählfrequenzsignals ($I_C$) wieder in Gang gesetzt wird.

**21.** Anordnung nach Anspruch 20, der Zählfrequenzgenerator einen Dreieckgenerator (124) enthält, der während der Dauer ($T_I$) jedes Meßzeitintervalls eine Dreieckspannung ($U_D$) mit der Zählfrequenz ($f_C$) erzeugt und am Beginn jedes Meßzeitintervalls die Erzeugung der Dreieckspannung ($U_D$) mit dem am Ende des vorhergehenden Meßzeitintervalls erreichten Signalpegel fortsetzt.

**22.** Anordnung nach Anspruch 21, bei der dem Dreieckgenerator (124) ein Impulsformer (126) nachgeschaltet ist, der die Ausgangsspannung ($U_D$) des Dreieckgenerators (124) in dazu phasensynchrone Zählimpulse ($I_C$) umformt.

**23.** Anordnung nach einem der Ansprüche 14 bis 17 mit einem Impulsgenerator (202), der zur Ermittlung der Anzahl (m) ganzer Wellenlängen der Ultraschallwelle im Meßrohr (10) einen kurzen Einzelimpuls ($I_D$) an einen der beiden Ultraschallwandler (12, 14) anlegt, so daß dieser zur Aussendung eines kurzen Wellenzugs angeregt wird, mit einem Zähler (222), der beim Anlegen des Einzelimpulses ($I_D$) zur Zählung eines Zählsignals ($S_R$) mit der Sendefrequenz ($f_M$) oder mit einem ganzzahligen Vielfachen ($2 \cdot f_M$) der Sendefrequenz in Gang gesetzt wird, und mit einer mit dem anderen Ultraschallwandler verbundenen Impulsempfangsschaltung (210), die beim Eintreffen des kurzen Wellenzugs am anderen Ultraschallwandler den Zähler (222) stillsetzt.

**24.** Anordnung nach Anspruch 23, bei der die Impulsempfangsschaltung (210) hintereinander einen Eingangsverstärker (212), eine Gleichrichterschaltung (214) und einen Schwellenwertschalter (216) enthält.

**25.** Anordnung nach Anspruch 23 oder 24, bei der dem Zähler (222) das Zählsignal ($S_R$) über eine Start-Stop-Logik (218) zugeführt wird, die durch ein die Erzeugung des kurzen Einzelimpulses ($I_D$) auslösendes Startsignal ($I_S$) geöffnet und durch ein vom Ausgang der Impulsempfangsschaltung (210) abgegebenes Stopsignal ($S_S$) gesperrt wird.

**26.** Anordnung nach einem der Ansprüche 23 bis 25 mit einem Frequenzverdoppler (220), der ein Rechtecksignal ($R_S$) mit der Sendefrequenz ($f_M$) empfängt und das Zählsignal ($S_R$) mit der doppelten Frequenz ($2 \cdot f_M$) abgibt.

**27.** Anordnung nach einem der Ansprüche 14 bis 26 mit Signalaufbereitungsschaltungen (20, 22), die das Empfangssignal ($U_E$) und das Sendesignal ($U_S$) in dazu phasengleiche Rechteckspannungen ($Q_E$, $Q_S$) umwandeln, und mit einem Phasendetektor (24), der die Rechteckspannungen ($Q_E$, $Q_S$) empfängt und Meßimpulse ($I_M$) liefert, deren Dauer ($T_I$) der Phasenverschiebung zwischen seinen Eingangssignalen entspricht und die Dauer der Meßzeitintervalle bestimmt.

**28.** Anordnung nach Anspruch 27, bei der zwischen dem Ausgang einer der beiden Signalaufbereitungsschaltungen (20, 22) und dem zugeordneten Eingang des Phasendetektors (24) eine Invertierschaltung (226) eingefügt ist, die durch ein von der Auswerteschaltung (32) geliefertes Steuersignal zur Invertierung der ihr zugeführten Rechteckspannung ($Q_S$ bzw. $Q_E$) betätigt wird, wenn die Auswerteschaltung (32) feststellt, daß die Dauer ($T_I$) der vom Phasendetektor (24) gelieferten Meßimpulse ($I_M$) unter einem vorbestimmten Wert liegt.

**29.** Anordnung nach einem der Ansprüche 14 bis 28 mit einer Amplitudenüberwachungsschaltung (224), die die Empfangswechselspannung ($U_E$) empfängt und zur Auswerteschaltung (32) ein Signal liefert, wenn die Amplitude der Empfangswechselspannung ($U_E$) unter einem vorbestimmten Wert liegt.

**30.** Anordnung nach einem der Ansprüche 14 bis 29, bei der jeder Ultraschallwandler (12, 14) durch einen koaxial zum Meßrohr (10) eingebauten ringförmigen piezoelektrischen Wandler (130) gebildet ist, der zur Messung der Phasenverschiebung durch eine Meßfrequenz ($f_M$) angeregt wird, die mit seiner Radialresonanzfrequenz übereinstimmt.

**31.** Anordnung nach Anspruch 30, bei der die Radialresonanzfrequenz des ringförmigen piezoelektrischen Wandlers (130) so gewählt ist, daß die Wellenlänge der sich im Medium ausbreitenden Ultraschallwelle größer als das 1,6-fache des Innendurchmessers des Meßrohres (10) ist.

**32.** Anordnung nach Anspruch 30 oder 31, bei der die Schallkennimpedanz des Meßrohres (10) wesentlich größer als die Schallkennimpedanz des darin strömenden Mediums ist.

**33.** Anordnung nach einem der Ansprüche 30 bis 32, bei der der ringförmige piezoelektrische Wandler (130) zur Bestimmung der Anzahl ganzer Wellenlängen im Meßrohr (10) durch einen kurzen Einzelimpuls ($I_D$) zu Schwingungen bei seiner Longitudinalresonanzfrequenz angeregt wird.

**34.** Anordnung nach einem der Ansprüche 30 bis 33, bei der die Innenfläche des ringförmigen piezoelektrischen Wandlers (130) mit einer gegen aggressive Medien resistenten Schutzschicht (138) bedeckt ist.

**35.** Anordnung nach einem der Ansprüche 30 bis 34, bei der zwischen dem ringförmigen piezoelektrischen Wandler (130) und den angrenzenden Rohrabschnitten Dichtungen (150, 152) eingefügt sind, deren Schallkennimpedanz wesentlich kleiner als die Schallkennimpedanz der Rohrabschnitte ist.

**36.** Anordnung nach einem der Ansprüche 30 bis 35, zu beiden Seiten des Meßrohres (10) Dämpfungsrohre (160) angebracht sind, deren Innenseite mit einem nicht porösen Dämpfungsmaterial (164) ausgekleidet ist.

**Claims**

**1.** A method for flow-rate measurement by means of ultrasonic waves which are propagated in a medium flowing through a measuring tube (10) between two ultrasonic transducers (12, 14) which are spaced a defined distance apart and one of which operates as a transmitting transducer which converts an electric transmission signal ($U_S$) into an ultrasonic wave of the same frequency ($f_M$), while the other operates as a receiving transducer which converts the incoming ultrasonic wave into an electric reception signal ($U_E$) of the same frequency, the flow rate being determined by measuring the phase shift between the transmission signal ($U_S$) and the reception signal ($U_E$) in such a way that in measurement time intervals whose duration ($T_I$) corresponds to the phase shift, those periods of a signal ($I_C$) of a counting frequency ($f_C$) are counted which are substantially greater than the measuring frequency ($f_M$) corresponding to the frequency of the transmission signal ($U_S$), that in a measurement cycle ($T_R$) comprising a plurality of successive measurement time intervals ($T_I$), the phase angle of the start phase ($\phi_S$) which the counting-frequency signal ($f_C$) has at the beginning of each counting operation with respect to the measurement time interval ($T_I$) is increased from measurement time interval to measurement time interval, and that the counts obtained in the course of the measurement cycle ($T_R$) are evaluated to form a measured value with increased measurement resolution.

**2.** A method as claimed in claim 1 wherein the start phase ($\phi_S$) of the counting-frequency signal ($I_C$) is changed in the course of the measuring cycle ($T_R$) by $2\pi$.

**3.** A method as claimed in claim 1 or 2 wherein the measuring frequency ($f_M$) is derived from the counting frequency ($f_C$) by frequency division, and wherein in each measurement cycle ($T_I$) a phase shift ($\phi_M$) is imparted to the measuring frequency ($f_M$) with respect to the counting frequency ($f_C$) which increases from period to period of the measuring frequency ($f_M$).

4. A method as claimed in claim 3 wherein the phase shift ($\phi_M$) imparted to the measuring frequency ($f_M$) increases steadily in the course of the measurement cycle ($T_R$).

5. A method as claimed in claim 4, wherein the phase shift ($\phi_M$) imparted to the measuring frequency ($f_M$) in each period of the measuring ferquency is varied in dependence upon preceding measurement results for the purpose of a successive approximation.

6. A method as claimed in claim 1 or 2 wherein the measuring frequency ($f_M$) is derived by frequency division from a frequency ($f_{C'}$) which differs by a predetermined difference frequency ($\Delta f$) from the counting frequency ($f_C$).

7. A method as claimed in claim 6 wherein the difference frequency ($\Delta f$) is equal to the measuring frequency ($f_M$) divided by the number (n) of the measurement time intervals ($T_I$) per measurement cycle ($T_R$).

8. A method as claimed in claim 1 wherein the countingfrequency signal ($I_C$) is generated only for the duration ($T_I$) of each measurement time interval, wherein the phase of the counting-frequency signal ($I_C$) is stored at the end of each measurement time interval, and wherein the generation of the counting-frequency signal ($I_C$) is continued at the beginning of each following measurement time interval with the stored phase.

9. A method as claimed in claim 8 wherein the counting-frequency signal ($I_C$) is derived from a triangular voltage ($U_D$) which is generated only for the duration ($T_I$) of each measurement time interval and is continued at the beginning of each measurement time interval from the signal level reached at the end of the preceding measurement time interval.

10. A method as claimed in any one of the preceding claims wherein upon detection of a duration ($T_I$) of the measurement time intervals which is too short for correct measurement of the phase shift, an additional phase shift of 180° is imparted to one of the two out-of-phase signals ($U_S$, $U_E$).

11. A method as claimed in claim 10 wherein the phase shift between two square-wave signals ($Q_S$, $Q_E$) derived from the transmission signal ($U_S$) and the reception signal ($U_E$) is measured, and wherein, to obtain the additional phase shift of 180°, one of the two square-wave signals ($Q_S$, $Q_E$) is inverted.

12. A method as claimed in any one of the preceding claims wherein, to determine whole wavelengths of the ultrasonic wave in the medium flowing through the measuring tube (10) between the two ultrasonic transducers (12, 14), the transmitting transducer is stimulated by a short pulse ($I_D$) to transmit a wave train, and wherein the periods of a signal ($S_R$) with the measuring frequency ($f_M$) or an integral multiple ($2 \cdot f_M$) thereof are counted during the travel time ($T_L$) of the wave train from the transmitting transducer to the receiving transducer.

13. A method as claimed in any one of the preceding claims wherein the amplitude of the reception signal ($U_E$) is monitored, and wherein upon detection of an amplitude insufficient for proper evaluation, a signal is sent to the evaluating circuit (23).

14. An arrangement comprising a measuring tube (10) through which a medium flows, two ultrasonic transducers (12, 14) on the measuring tube (10) which are spaced a defined distance ($L_M$) apart, devices for applying an electric transmission signal ($U_S$) with the measuring frequency ($f_M$) to one of the two ultrasonic transducers and for receiving the electric reception signal ($U_E$) with the measuring frequency from the other ultrasonic transducer, a counting-frequency generator (28) which generates a counting-frequency signal ($I_C$) with a counting frequency ($f_C$) which is substantially greater than the measuring frequency ($f_M$), a counter (30) which counts the periods of the counting-frequency signal ($I_C$) in measurements time intervals ($T_I$) corresponding to the phase shift between the transmission signal ($U_S$) and the reception signal $U_E$), an evaluating circuit (32) to which the count reached in each measurement time interval ($T_I$) is transferred, and devices (34, 36, 38; 32, 70; 80, 34; 100, 120; 124, 126) whereby in a measurement cycle ($T_R$) comprising a plurality of successive measurement time intervals ($T_I$), the phase angle of the start phase ($\phi_S$) which the counting-frequency signal ($I_C$) has at the beginning of each counting operation with respect to the measurement time interval ($T_I$) is increased

23

EP 0 378 651 B1

from measurement time interval to measurement time interval.

**15.** An arrangement as claimed in claim 14 wherein the output of the counting-frequency generator (28) is connected to a frequency divider (34) whose division factor (N) is equal to the ratio between the counting frequency ($f_C$) and the measuring frequency ($f_M$), and which is followed by a controllable phase shifter (36) which imparts to the output of the frequency divider (34) a phase shift determined by a phase control signal ($U_R$),and wherein the output of the controllable phase shifter (36) is used for the electric transmission signal ($U_S$).

**16.** An arrangement as claimed in claim 15 wherein the phase control signal ($U_R$) is a ramp signal which changes linearly in the course of each measurement cycle.

**17.** An arrangement as claimed in claim 15, comprising a digital-to-analog converter (70) which converts digital code groups into the phase control signal ($U_R$).

**18.** An arrangement as claimed in any one of claims 15 to 17 wherein the controllable phase shifter (36) is formed by a PLL circuit.

**19.** An arrangement as claimed in claim 14 wherein the counting-frequency generator (80) provides at a first output (80a) the counting-frequency signal ($I_C$) and at a second output a signal having a frequency ($f_C'$) which differs from the counting frequency ($f_C$) by a predetermined difference frequency ($\Delta_f$), and wherein the second output (80b) of the counting-frequency generator (80) is connected to a frequency divider (34) whose output ($R_S$) is used to generate the electric transmission signal ($U_S$).

**20.** An arrangement as claimed in claim 14 wherein the counting-frequency generator (124, 126) is stopped at the end of each measurement time interval ($T_I$) and is re-started at the beginning of the next measurement time interval ($T_I$) with the phase of the counting-frequency signal ($I_C$) reached at the stop.

**21.** An arrangement as claimed in claim 20 wherein the counting-frequency generator includes a triangle generator (124) which generates a triangular voltage ($U_D$) with the counting frequency ($f_C$) for the duration ($T_I$) of each measurement time interval and continues the generation of the triangular voltage ($U_D$) at the beginning of each measurement time interval with the signal level reached at the end of the preceding measurement time interval.

**22.** An arrangement as claimed in claim 21 wherein the triangle generator (124) is followed by a pulse shaper (126) which converts the output voltage ($U_D$) of the triangle generator (124) into count pulses ($I_C$) in phase therewith.

**23.** An arrangement as claimed in any one of claims 14 to 17, comprising a pulse generator (202) which, to determine the number (m) of whole wavelengths of the ultrasonic wave in the measuring tube (10), applies a short single pulse ($I_D$) to one of the two ultrasonic transducers (12, 14), so that the latter is stimulated to transmix a short wave train, a counter (222) which is started upon application of the single pulse ($I_D$) to count a counting signal ($S_R$) with the transmit frequency ($f_M$) or an integral multiple ($2 \cdot f_M$) thereof, and a pulsereceiving circuit (210) which is connected to the other ultrasonic transducer and stops the counter (222) upon arrival of the short wave train at the other ultrasonic transducer.

**24.** An arrangement as claimed in claim 23 wherein the pulse-receiving circuit (210) contains an input amplifier (212), a rectifier circuit (214), and a threshold switch (216) in series.

**25.** An arrangement as claimed in claim 23 or 24 wherein the counting signal ($S_R$) is applied to the counter (222) through a start-stop logic (218) which is enabled by a start signal ($I_S$) initiating the generation of the short single pulse ($I_D$) and is inhibited by a stop signal ($S_S$) provided at the output of the pulse-receiving circuit (210).

**26.** An arrangement as claimed in any one of claims 23 to 25, comprising a frequency doubler (220) which receives a square-wave signal ($R_S$) with the transmit frequency ($f_M$) and delivers the counting signal ($S_R$) with twice the transmit frequency ($2 \cdot f_M$).

24

**27.** An arrangement as claimed in any one of claims 14 to 26, comprising signal-conditioning circuits (20, 22) which convert the reception signal ($U_E$) and the transmission signal ($U_S$) into square-wave voltages ($Q_E$, $Q_S$) in phase therewith, and a phase detector (24) which receives the square-wave voltages ($Q_E$, $Q_S$) and provides measuring pulses ($I_M$) whose duration ($T_I$) corresponds to the phase shift between the input signals of the phase detector (24) and determines the duration of the measurement time intervals.

**28.** An arrangement as claimed in claim 27 wherein between the output of one of the two signal-conditioning circuits (20, 22) and the associated input of the phase detector (24), an inverter (226) is inserted which is operated by a control signal provided by the evaluating circuit (32) to invert the applied square-wave voltage ($Q_S$ or $Q_E$) when the evaluating circuit (S) determines that the duration ($T_I$) of the measuring pulses ($I_M$) provided by the phase detector (24) is less than a predetermined value.

**29.** An arrangement as claimed in any one of claims 14 to 28, comprising an amplitude-monitoring circuit (224) which receives the AC reception voltage ($U_E$), and supplies a signal to the evaluating circuit (32) when the amplitude of the AC reception voltage ($U_E$) is less than a predetermined value.

**30.** An arrangement as claimed in any one of claims 14 to 29 wherein each of the ultrasonic transducers (12, 14) is an annular piezoelectric transducer (130) which is installed coaxially with the measuring tube (10) and, to measure the phase shift, is stimulated by a measuring frequency ($f_M$) equal to its radial resonance frequency.

**31.** An arrangement as claimed in claim 30 wherein the radial resonance frequency of the annular piezoelectric transducer (130) is so chosen that the wavelength of the ultrasonic wave propagated in the medium is greater than 1.6 times the internal diameter of the measuring tube (10).

**32.** An arrangement as claimed in claim 30 or 31 wherein the acoustic characteristic impedance of the measuring tube (10) is substantially greater than the acoustic characteristic impedance of the medium flowing therein.

**33.** An arrangement as claimed in any one of claims 30 to 32 wherein, to determine the number of whole wavelengths in the measuring tube (10), the annular piezoelectric transducer (130) is excited by a short single pulse ($I_D$) into vibrations at its longitudinal resonance frequency.

**34.** An arrangement as claimed in any one of claims 30 to 33 wherein the inner surface of the annular piezoelectric transducer (130) is covered with a protective layer (138) resistant to agressive media.

**35.** An arrangement as claimed in any one of claims 30 to 34 wherein between the annular piezoelectric transducer (130) and the adjacent tube sections, seals (150, 152) are inserted whose acoustic characteristic impedance is substantially lower than the acoustic characteristic impedance of the tube sections.

**36.** An arrangement as claimed in any one of claims 30 to 35 wherein on both sides of the measuring tube (10), attenuator tubes (160) are mounted whose inner surfaces are lined with a nonporous damping material (164).

**Revendications**

**1.** Procédé et dispositif de mesure d'écoulement au moyen d'ondes ultrasonores qui se propagent dans un milieu s'écoulant dans un tube de mesure (10) entre deux transducteurs à ultrasons (12, 14) espacés entre eux d'une valeur définie, dont un fonctionne comme transducteur d'émission convertissant un signal électrique d'émission ($U_S$) en un signal ultrasonore de même fréquence ($f_M$), tandis que le second fonctionne comme transducteur de réception convertissant le signal ultrasonore d'entrée en un signal électrique de réception ($U_E$) de même fréquence, dans lequel le déphasage entre le signal d'émission ($U_S$) et le signal de réception ($U_E$) est mesuré pour déterminer l'écoulement, caractérisé en ce que dans les intervalles de temps de mesure, dont la durée ($T_I$) correspond au déphasage, les périodes d'un signal ($I_C$) sont chaque fois comptées par une fréquence de comptage ($f_C$) qui est nettement plus grande que la fréquence de mesure ($f_M$) correspondant à la fréquence du signal d'émission ($U_S$), en ce que l'angle de phase de la phase de départ ($\phi_S$), qui représente le signal de fréquence de comptage ($f_C$) au début de chaque processus de comptage comparé à l'intervalle de temps de mesure ($T_I$), est augmenté dans un cycle de mesure ($T_R$) comprenant plusieurs intervalles de temps de mesure ($T_I$) d'un intervalle de temps de mesure à un autre, et en ce que les valeurs de comptage obtenues pendant le déroulement du cycle de mesure ($T_R$) sont évaluées pour former une valeur de mesure de résolution plus élevée.

2. Procédé selon la revendication 1, caractérisé en ce que la phase de début ($\phi_S$) du signal de fréquence de comptage ($I_C$) est modifiée de $2\pi$ pendant le déroulement du cycle de mesure ($T_R$).

3. Procédé selon la revendication 1 ou 2, caractérisé en ce que la fréquence de mesure ($f_M$) est dérivée de la fréquence de comptage ($f_C$) par division de fréquence et en ce que, dans chaque cycle de mesure ($T_I$) de la fréquence de mesure ($f_M$) comparé à la fréquence de comptage ($f_C$), un déphasage ($\phi_M$) plus grand est obtenu d'une période à une autre de la fréquence de mesure ($f_M$).

4. Procédé selon la revendication 3, caractérisé en ce que le déphasage ($\phi_M$) dû à la fréquence de mesure ($f_M$) devient constamment de plus en plus grand pendant le déroulement du cycle de mesure ($T_R$).

5. Procédé selon la revendication 4, caractérisé en ce que le déphasage ($\phi_M$) dû à la fréquence de mesure ($f_M$) est modifié dans chaque période de la fréquence de mesure en fonction des résultats de mesure précédents en vue d'une approximation successive.

6. Procédé selon la revendication 1 ou 2, caractérisé en ce que la fréquence de mesure ($f_M$) est dérivée, par division de fréquence, d'une fréquence ($f_C'$) qui se différence de la fréquence de comptage ($f_C$) d'une fréquence différentielle ($\Delta_f$) prédéfinie.

7. Procédé selon la revendication 6, caractérisé en ce que la fréquence différentielle ($\Delta_f$) égale à la fréquence de mesure ($f_M$) est divisée par le nombre (n) d'intervalles de temps de mesure ($T_I$) par cycle de mesure ($T_R$).

8. Procédé selon la revendication 1, caractérisé en ce que le signal de fréquence de comptage ($I_C$) est généré seulement pendant le durée ($T_I$) de chaque intervalle de temps de mesure, en ce que la relation des phases du signal de fréquence de comptage ($I_C$) est mémorisée à la fin de chaque intervalle de temps de mesure, et en ce que la génération du signal de fréquence de comptage ($I_C$) est poursuivie au début de chaque intervalle de temps de mesure suivant avec la relation de phase mémorisée.

9. Procédé selon la revendication 8, caractérisé en ce que le signal de fréquence de comptage ($I_C$) est dérivé d'une tension triphasée ($U_D$), qui est seulement générée pendant la durée ($T_I$) de chaque intervalle de temps de mesure et est poursuivie au début de chaque intervalle de temps de mesure du niveau de signal atteint à la fin de l'intervalle de temps de mesure précédent.

10. Procédé selon l'une quelconque des revendications précédentes, caractérisé en ce que, pour la détermination d'un des intervalles de temps de mesure pour la mesure précise du déphasage de faible durée ($T_I$), un déphasage supplémentaire de 180° est appliqué à un des deux signaux en opposition de phase ($U_S$, $U_E$).

11. Procédé selon la revendication 10, caractérisé en ce que le déphasage est mesuré entre deux signaux rectangulaires ($Q_S$, $Q_E$) dérivés du signal d'émission ($U_S$) et du signal de réception ($U_E$), et en ce qu'un des deux signaux rectangulaires ($Q_S$, $Q_E$) est inversé pour délivrer le déphasage supplémentaire de 180°.

12. Procédé selon l'une quelconque des revendications précédentes, caractérisé en ce que, pour calculer des longueurs d'onde complètes de l'onde ultrasonore dans le milieu s'écoulant dans le tube de mesure (10) entre les deux transducteurs ultrasonores (12, 14), le transducteur d'émission est excité par une courte impulsion ($I_D$) pour la transmission d'un train d'impulsions et les périodes d'un signal ($S_R$) sont comptées avec la fréquence de mesure ($f_M$) ou un multiple entier ($2.f_M$) de la fréquence de mesure pendant la durée de transfert ($T_L$) du train d'impulsions du transducteur d'émission jusqu'au transducteur de réception.

EP 0 378 651 B1

**13.** Procédé selon l'une quelconque des revendications précédentes, caractérisé en ce que l'amplitude du signal de réception ($U_E$) est contrôlée et un signal est transmis au circuit d'évaluation (23) pour déterminer si l'amplitude est suffisante pour obtenir une évaluation parfaite.

**14.** Dispositif avec un tube de mesure (10) traversé par un milieu, deux transducteurs à ultrasons (12, 14) installés sur le tube de mesure (10) et espacés entre eux d'une distance définie ($L_M$), dispositifs pour appliquer un signal d'émission électrique ($U_S$) à la fréquence de mesure ($f_M$) à un des deux transducteurs à ultrasons et pour la réception du signal de réception électrique ($U_E$) à la fréquence de mesure délivré par l'autre transducteur à ultrasons, un générateur de fréquence de comptage (28) qui génère un signal de fréquence de comptage ($I_C$) à une fréquence de comptage ($f_C$), laquelle est nettement plus élevée que la fréquence de mesure ($f_M$), un compteur (30) qui compte les périodes du signal de fréquence de mesure ($I_C$) dans des intervalles de temps de mesure ($T_I$), qui correspondent au déphasage entre le signal d'émission ($U_S$) et le signal de réception ($U_E$), un circuit d'évaluation (32) vers lequel est transféré l'état du compteur atteint dans chaque intervalle de temps de mesure ($T_I$), et dispositifs (34, 36, 38; 32, 70; 80, 34; 100, 120; 124, 126) qui amplifient, d'un intervalle de temps de mesure à un autre, l'angle de la phase de départ ($\phi_S$) laquelle représente le signal de fréquence de comptage ($I_C$) au début de chaque processus de comptage par rapport à l'intervalle de temps de mesure ($T_I$), dans un cycle de mesure ($T_R$) comprenant plusieurs intervalles de temps de mesure ($T_I$) en succession.

**15.** Dispositif selon la revendication 14, caractérisé en ce qu'un diviseur de fréquence (34) est raccordé à la sortie du générateur de fréquence de comptage (28), son facteur de division ($_N$) correspondant au rapport entre la fréquence de comptage ($f_C$) et la fréquence de mesure ($f_M$), en ce qu'un déphaseur pilotable (36) est raccordé en sortie du diviseur de fréquence (34) et applique au signal de sortie du diviseur de fréquence (34) un déphasage défini par un signal de commande de phase ($U_R$), et en ce que le signal de sortie du déphaseur pilotable (36) est utilisé pour le signal électrique d'émission ($U_S$).

**16.** Dispositif selon la revendication 15, caractérisé en ce que le signal de commande de phase ($U_R$) est un signal de rampe qui se modifie linéairement pendant le déroulement de chaque cycle de mesure.

**17.** Dispositif selon la revendication 15, caractérisé en ce qu'un convertisseur numérique-analogique (70) convertit les groupes de codes numériques en un signal de commande de phase ($U_R$).

**18.** Dispositif selon l'une quelconque des revendications 15 à 17, caractérisé en ce que le déphaseur pilotable (36) est formé d'un circuit PLL.

**19.** Dispositif selon la revendication 14, caractérisé en ce que le générateur de fréquence de comptage (80) délivre par une première sortie (80a) le signal de fréquence de comptage ($I_C$), et par une deuxième sortie un signal de fréquence ($f_C'$), qui diffère de la fréquence de comptage ($f_C$) d'une fréquence différentielle prédéfinie ($\Delta_f$), et en ce qu'à la deuxième sortie (80b) du générateur de fréquence de comptage (80), un diviseur de fréquence (34) est raccordé, dont le signal de sortie ($R_S$) est utilisé pour générer le signal électrique d'émission ($U_S$).

**20.** Dispositif selon la revendication 14 caractérisé en ce que le générateur de fréquence de comptage (124, 126) est arrêté à la fin de chaque intervalle de temps de mesure ($T_I$) et est redémarré au début de l'intervalle de temps de mesure ($T_I$) suivant par la relation des phases du signal de fréquence de comptage ($I_C$) atteinte lors de l'arrêt.

**21.** Dispositif selon la revendication 20, caractérisé en ce que le générateur de fréquence de comptage contient un générateur de tension en triangle (124) qui génère une tension en triangle ($U_D$) avec la fréquence de comptage ($f_C$) pendant la durée ($T_I$) de chaque intervalle de temps de mesure et qui continue, au début de chaque intervalle de temps de mesure, la génération de la tension en triangle ($U_D$) avec le niveau du signal atteint à la fin de l'intervalle de temps de mesure précédent.

**22.** Dispositif selon la revendication 21, caractérisé en ce qu'à la sortie du générateur de tension en triangle (124) est branché un circuit de mise en forme d'impulsions (126) qui transforme la tension de sortie ($U_D$) du générateur de tension en triangle (124) en des impulsions de comptage ($I_C$) synchronisées en phase.

27

23. Dispositif selon l'une quelconque des revendications 14 à 17, caractérisé en ce qu'un générateur d'impulsions (202) applique, pour déterminer le nombre (m) de longueurs d'onde complètes de l'onde ultrasonore dans le tube de mesure (10), une impulsion unique ($I_D$) de courte longueur à l'un des deux transducteurs à ultrasons (12, 14), afin que celui-ci soit excité pour transmettre un bref train d'ondes, en ce qu'un compteur (222) est démarré par l'application de l'impulsion unique ($I_D$) pour comptage d'un signal de comptage ($S_R$) avec la fréquence d'émission ($f_M$) ou avec un multiple entier ($2.f_M$) de la fréquence d'émission, et en ce qu'un circuit de réception d'impulsion (210) raccordé à l'autre transducteur à ultrasons arrête le compteur (222) lorsque le bref train d'impulsions parvient à l'autre transducteur à ultrasons.

24. Dispositif selon la revendication 23, caractérisé en ce que le circuit de réception d'impulsions (210) en sortie d'un amplificateur d'entrée (212) comprend un circuit redresseur (214) et un commutateur de seuil (216).

25. Dispositif selon la revendication 23 ou 24, caractérisé en ce que le signal de comptage ($S_R$) est appliqué au compteur (222) par l'intermédiaire d'un circuit logique bistable (218), lequel est ouvert par un signal de départ déclenché par la génération de la courte impulsion unique ($I_D$), et est fermé par un signal d'arrêt ($S_S$) délivré par la sortie du circuit de réception d'impulsions (210).

26. Dispositif selon l'une quelconque des revendications 23 à 25, caractérisé en ce qu'un doubleur de fréquence (220) reçoit un signal rectangulaire ($R_S$) avec la fréquence d'émission ($f_M$) et délivre le signal de comptage ($S_R$) avec la fréquence doublée ($2.f_M$).

27. Dispositif selon l'une quelconque des revendications 14 à 26, caractérisé en ce que des circuits de régénération de signaux (20, 22) convertissent le signal de réception ($U_E$) et le signal d'émission ($U_S$) en des tensions rectangulaires de même phase ($Q_E$, $Q_S$), et en ce qu'un détecteur de phases (24) reçoit les tensions rectangulaires ($Q_E$, $Q_S$) et délivre des impulsions de mesure ($I_M$) dont la durée ($T_I$) correspond au déphasage entre ses signaux d'entrée et qui définit la durée des intervalles de temps de mesure.

28. Dispositif selon la revendication 27, caractérisé en ce qu'entre la sortie de l'un des deux circuits de régénération des signaux (20, 22) et l'entrée correspondante du détecteur de phases (24), se trouve un circuit inverseur (226) qui est commandé par un signal de commande en provenance d'un des circuits d'évaluation (32) pour réaliser l'inversion de la tension rectangulaire appliquée ($Q_S$ ou $Q_E$) lorsque le circuit d'évaluation (32) détermine que la durée ($T_I$) des impulsions de mesure ($I_M$) délivrées par le détecteur de phases (24) est inférieure à une valeur prédéfinie.

29. Dispositif selon l'une quelconque des revendications 14 à 28, caractérisé en ce qu'un circuit de contrôle d'amplitude (224) reçoit la tension alternative de réception ($U_E$) et délivre un signal au circuit d'évaluation (32), lorsque l'amplitude de la tension alternative de réception ($U_E$) est inférieure à une valeur prédéfinie.

30. Dispositif selon l'une quelconque des revendications 14 à 29, caractérisé en ce que chaque transducteur à ultrasons (12, 14) est formé d'un transducteur piézoélectrique toroïdal (130) intégré coaxialement au tube de mesure (10), et est excité par une fréquence de mesure ($f_M$) pour la mesure du déphasage qui correspond à sa fréquence de résonance radiale.

31. Dispositif selon la revendication 30, caractérisé en ce que la fréquence de résonance radiale du transducteur piézoélectrique toroïdal (130) est choisie de telle sorte que la longueur d'onde de l'onde ultrasonore se développant dans le milieu est supérieure de 1,6 fois le diamètre intérieur du tube de mesure (10).

32. Dispositif selon la revendication 30 ou 31, caractérisé en ce que l'impédance acoustique caractéristique du tube de mesure (10) est nettement plus grande que l'impédance acoustique caractéristique du milieu s'écoulant dans le tube.

33. Dispositif selon la revendication 30 ou 31, caractérisé en ce que le transducteur piézoélectrique toroïdal (130), pour déterminer le nombre de longueurs d'onde complètes dans le tube de mesure (10), est

EP 0 378 651 B1

excité par une brève impulsion unique ($I_D$) pour obtenir des oscillations à sa fréquence de résonance longitudinale.

34. Dispositif selon l'une quelconque des revendications 30 à 33, caractérisé en ce que la surface intérieure du transducteur piézoélectrique toroïdal (130) est recouverte d'une couche de protection résistant aux milieux agressifs.

35. Dispositif selon l'une quelconque des revendications 30 à 34, caractérisé en ce que des joints (150, 152) sont placés entre le transducteur piézoélectrique toroïdal (130) et les sections de tube adjacentes, dont l'impédance acoustique caractéristique est nettement plus petite que l'impédance acoustique caractéristique des sections de tube.

36. Dispositif selon l'une quelconque des revendications 30 à 35, caractérisé en ce que des deux côtés du tube de mesure (10) sont placés des tubes d'atténuation (160) dont la paroi intérieure est revêtue d'un matériau d'atténuation non poreux (164).

29

FIG. 1

FIG. 2

EP 0 378 651 B1

FIG. 3

FIG. 4

FIG. 6

FIG. 5

FIG. 7

EP 0 378 651 B1

$U_S$

36a

36 $f_M$

$U_R$

**steuerbarer Phasenschieber**

22 $U_S$

**Sendesignal-Aufbereitungs-schaltung**

$U_E$ 20

**Empfangssignal-Aufbereitungs-schaltung**

70

**Digital-Analog-Wandler**

$Q_S$

24

**Phasen-detektor**

$Q_E$

28

**Zählfrequenz-generator $f_C$**

$I_C$

26 $I_M$

**Tor-schaltung**

30

**Zähler**

$f_M'$ **Frequenzteiler ÷ N** $f_C$

34

32

**Auswerte-schaltung**

FIG. 8

FIG. 9

FIG. 10

$f_{Ref}$

81 — Phasen-komparator

82 — Tiefpaß-filter

83 — spannungs-gesteuerter Oszillator — $f_C'$

84 — spannungs-gesteuerter Oszillator — $f_C$

85 — Σ

88 — einstellbarer Frequenzteiler

86 — Frequenzteiler ÷ N — $f_M$

90 — Phasen-kompa-rator

91 — Tiefpaß-filter

92 — Rechteck-signal-former

93 — Phasen-kompa-rator

94 — Frequenzteiler ÷ n

95 — Tiefpaß-filter

87 — Sinus-signal-former

$U_S$   $f_M$   $R_S$

FIG. 11

FIG. 12

EP 0 378 651 B1

FIG. 13

FIG. 14

FIG. 15

EP 0 378 651 B1

FIG. 16

42

FIG. 17

FIG. 18